(19) Europäisches Patentamt
European Patent Office
Office européen des brevets

(11) **EP 4 007 119 A1**

(12) **EUROPEAN PATENT APPLICATION**
published in accordance with Art. 153(4) EPC

(43) Date of publication:
**01.06.2022 Bulletin 2022/22**

(21) Application number: **20844318.4**

(22) Date of filing: **03.07.2020**

(51) International Patent Classification (IPC):
**H02J 50/12** (2016.01)      **H02J 50/40** (2016.01)
**H02J 50/90** (2016.01)

(52) Cooperative Patent Classification (CPC):
**H02J 50/12; H02J 50/40; H02J 50/90**

(86) International application number:
**PCT/JP2020/026128**

(87) International publication number:
**WO 2021/014932 (28.01.2021 Gazette 2021/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.07.2019 JP 2019136680**
**19.05.2020 JP 2020087198**

(71) Applicant: **Denso Corporation**
**Aichi 448-8661 (JP)**

(72) Inventors:
• **TAKAHASHI, Masaya**
  **Kariya- city, Aichi 448-8661 (JP)**
• **TAKAHASHI, Eisuke**
  **Kariya- city, Aichi 448-8661 (JP)**
• **SUMIYA, Hayato**
  **Kariya- city, Aichi 448-8661 (JP)**
• **YAMAGUCHI, Nobuhisa**
  **Kariya- city, Aichi 448-8661 (JP)**

(74) Representative: **TBK**
**Bavariaring 4-6**
**80336 München (DE)**

(54) **CONTACTLESS POWER FEEDING DEVICE**

(57)      A contactless power feeding device (100) that supplies electric power to a power receiving device (200) without contact includes: a power transmitting circuit (130) that transmits alternating-current power; and a power transmitting resonator including a power transmitting coil (112). The input impedance of the power transmitting resonator is set low in a facing state in which a power receiving coil (212) included in the power receiving device (200) faces the power transmitting coil, and the input impedance of the power transmitting resonator is set high in a non-facing state in which the power receiving coil does not face the power transmitting coil.

FIG.1

EP 4 007 119 A1

**Description**

[Cross Reference to Related Application]

This application claims the benefit of priority to Japanese Patent Application No. 2019-136680 filed July 25, 2019, and Japanese Patent Application No. 2020-087198 filed May 19, 2020, the disclosure of each of which is incorporated herein by reference in its entirety.

[Technical Field]

The present disclosure relates to contactless power feeding devices.

[Background Art]

JP 2019-071719 A discloses a wireless power feeding system including: a plurality of power transmitting coils connected in parallel with a high frequency power supply; and a power receiving coil mounted on a mobile body. An electric current control element (for example, a saturable reactor) is disposed between the high frequency power supply and each of the power transmitting coils; the impedance of the electric current control element increases when an electric current flowing from the high frequency power supply to the power transmitting coil is less than a threshold value, and decreases when the electric current flowing from the high frequency power supply to the power transmitting coil is greater than or equal to the threshold value. Thus, the impedance of the electric current control element disposed on the power transmitting coil that does not face the power receiving coil increases, resulting in a reduction in electric current supply from the high frequency power supply to the power transmitting coil.

In the configuration of the prior art, however, it is necessary to include an electric current control element that changes impedance, in addition to a power transmitting coil and a resonant capacitor that constitute a power transmitting resonant circuit to be used for contactless power feeding. Furthermore, the saturable reactor provided as an example of the electric current control element needs to increase inductance in order to increase the impedance, leading to an increase in the size of the saturable reactor to be used as the electric current control element.

[Summary of the Invention]

According to one aspect of the present disclosure, a contactless power feeding device that supplies electric power to a power receiving device without contact is provided. This contactless power feeding device (100) includes: a power transmitting circuit (130) that transmits alternating-current power; and a power transmitting resonator including a power transmitting coil (112), input impedance of the power transmitting resonator is set low in a facing state in which a power receiving coil (212) included in the power receiving device (200) faces the power transmitting coil, and the input impedance of the power transmitting resonator is set high in a non-facing state in which the power receiving coil does not face the power transmitting coil.

With the contactless power feeding device according to this aspect, as a result of an increase in the input impedance of the power transmitting resonator including the power transmitting coil that does not face the power receiving coil, the supply of an electric current from the power transmitting circuit to the power transmitting coil that does not face the power receiving coil can be reduced. Thus, magnetic flux leakage and loss at the power transmitting coil that does not transmit electric power can be reduced without the use of large components such as the electric current control element of the prior art. Furthermore, since an electric current is automatically supplied to only the power transmitting coil that faces the power receiving coil, it is possible to omit a position sensor for determining the position of the power receiving coil or control to switch between transmitting and not transmitting electric power to the power transmitting coil.

[Brief Description of the Drawings]

These and other objects, features and advantages of the present disclosure will become more apparent from the following detailed description taken in conjunction with the accompanying drawings, in which:

Fig. 1 is an explanatory diagram illustrating a power receiving device and a contactless power feeding device according to the first embodiment;
Fig. 2 is an explanatory diagram illustrating the positional relationship of a power receiving coil with respect to a power transmitting coil;
Fig. 3 is an explanatory diagram illustrating an equivalent circuit of the contactless power feeding device and the power receiving device in a facing state;

Fig. 4 is an explanatory diagram illustrating an equivalent circuit of the contactless power feeding device in a non-facing state;

Fig. 5 is an explanatory diagram illustrating the contactless power feeding device and the power receiving device in each of which a filter circuit is provided;

Fig. 6 is an explanatory diagram illustrating the configuration of a power transmitting resonant circuit according to the second embodiment;

Fig. 7 is an explanatory diagram illustrating one example of positioning of a resonant capacitor;

Fig. 8 is an explanatory diagram illustrating the configuration of a power transmitting resonant circuit according to the third embodiment;

Fig. 9 is an explanatory diagram illustrating one example of inductance of a power transmitting coil;

Fig. 10 is an explanatory diagram illustrating a reason of a change in the inductance of the power transmitting coil;

Fig. 11 is an explanatory diagram illustrating a contactless power feeding device according to the fourth embodiment;

Fig. 12 is an explanatory diagram illustrating one example of the relationship between capacitance and a control voltage of the resonant capacitor;

Fig. 13 is an explanatory diagram illustrating one example of the relationship between capacitance of the resonant capacitor and a facing area;

Fig. 14 is an explanatory diagram illustrating another example of the relationship between the capacitance of the resonant capacitor and the facing area;

Fig. 15 is an explanatory diagram illustrating another example of the relationship between the capacitance of the resonant capacitor and the facing area;

Fig. 16 is an explanatory diagram illustrating a contactless power feeding device according to the fifth embodiment;

Fig. 17 is an explanatory diagram illustrating a contactless power feeding device according to the sixth embodiment;

Fig. 18 is an explanatory diagram illustrating a contactless power feeding device according to the seventh embodiment;

Fig. 19 is an explanatory diagram illustrating a contactless power feeding device according to the eighth embodiment;

Fig. 20 is a flowchart of power feeding control;

Fig. 21 is an explanatory diagram illustrating another configuration of a variable control circuit;

Fig. 22 is an explanatory diagram illustrating another configuration of the variable control circuit;

Fig. 23 is an explanatory diagram illustrating a contactless power feeding device according to the ninth embodiment;

Fig. 24 is an explanatory diagram illustrating a contactless power feeding device according to the tenth embodiment;

Fig. 25 is an explanatory diagram illustrating a contactless power feeding device according to the eleventh embodiment;

Fig. 26 is an explanatory diagram illustrating a contactless power feeding device according to the twelfth embodiment;

Fig. 27 is an explanatory diagram illustrating a contactless power feeding device according to the thirteenth embodiment;

Fig. 28 is an explanatory diagram illustrating a contactless power feeding device according to the fourteenth embodiment;

Fig. 29 is an explanatory diagram illustrating a contactless power feeding device according to the fifteenth embodiment;

Fig. 30 is an explanatory diagram illustrating a contactless power feeding device according to the sixteenth embodiment;

Fig. 31 is an explanatory diagram illustrating another configuration of the contactless power feeding device according to the sixteenth embodiment;

Fig. 32 is an explanatory diagram illustrating another configuration of the contactless power feeding device according to the sixteenth embodiment;

Fig. 33 is a schematic configuration diagram of a contactless power feeding system for vehicles according to the seventeenth embodiment;

Fig. 34 is another schematic configuration diagram of a contactless power feeding system for vehicles according to the seventeenth embodiment;

Fig. 35 is another schematic configuration diagram of a contactless power feeding system for vehicles according to the seventeenth embodiment;

Fig. 36 is an explanatory diagram illustrating the dimensions of a power transmitting coil installed in a vehicle travel path; and

Fig. 37 is an explanatory diagram illustrating the dimensions of the power transmitting coil installed in the vehicle travel path.

[Description of the Embodiments]

A. First Embodiment:

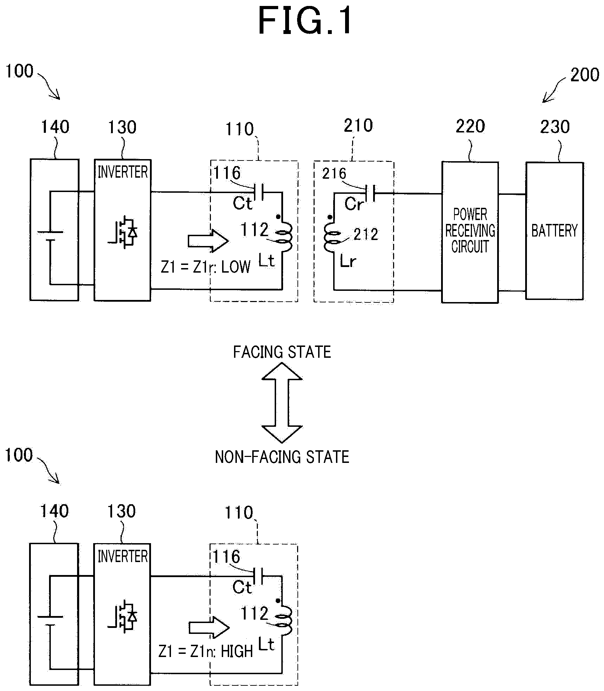

A contactless power feeding device 100 illustrated in Fig. 1 is a power feeding device capable of supplying electric power without contact to a power receiving device 200 disposed in a facing state in which a power receiving coil 212 of the power receiving device 200 is electromagnetically coupled to a power transmitting coil 112 of the contactless power feeding device 100. Note that in Fig. 1, the power receiving device 200 that faces the contactless power feeding device 100 and the power receiving device 200 that does not face the contact less power feeding device 100 are illustrated for comparison. The power receiving device 200 is installed in various devices that operate using electric power such as electronic devices and electric vehicles.

The contactless power feeding device 100 includes a power supply circuit 140, a power transmitting circuit 130, and a power transmitting resonant circuit 110. The power receiving device 200 includes a power receiving resonant circuit 210, a power receiving circuit 220, and a battery 230.

The power transmitting resonant circuit 110 is a resonant circuit including the power transmitting coil 112 and a power transmitting resonant capacitor 116 which are connected in series. The power receiving resonant circuit 210 is a resonant circuit including the power receiving coil 212 and a power receiving resonant capacitor 216 which are connected in series, as with the power transmitting resonant circuit 110. The power transmitting resonant circuit 110 is a device that transmits alternating-current power to the power receiving device 200 without contact when the power transmitting resonant circuit 110 and the power receiving resonant circuit 210 resonate with the power transmitting coil 112 and the power receiving coil 212 electromagnetically coupled as a result of the power receiving coil 212 facing the power transmitting coil 112. The power receiving resonant circuit 210 is a device that obtains the alternating-current power guided by the power receiving coil 212. A resonance method based on primary series and secondary series capacitors (also referred to as the "SS method") is applied to the power transmitting resonant circuit 110 and the power receiving resonant circuit 210. Furthermore, these circuits use a contactless power feeding method for power transmitting side single phase/power receiving side single phase structures in which the power transmitting side is composed of a single-phase power transmitting coil 112 and the power receiving side is composed of a single-phase power receiving coil 212. Note that the inductance of the power transmitting coil 112 is denoted as Lt, and the capacitance of the power transmitting resonant capacitor 116 is denoted as Ct. The inductance of the power receiving coil 212 is denoted as Lr, and the capacitance of the power receiving resonant capacitor 216 is denoted as Cr. Parameters, namely, the inductance of the coils and the capacitance of the capacitors, in the power transmitting resonant circuit 110 and the power receiving resonant circuit 210 will be described later.

The power transmitting circuit 130 converts direct-current power supplied from the power supply circuit 140 into high-frequency alternating-current power and supplies the high-frequency alternating-current power to the power transmitting coil 112. The power transmitting circuit 130 is configured as an inverter circuit, for example. The power supply circuit 140 is configured as an AC/DC converter circuit that rectifies an alternating-current voltage at an external power supply and outputs a direct-current voltage, for example.

The power receiving circuit 220 converts the alternating-current power obtained by the power receiving resonant circuit 210 into direct-current power and charges the battery 230 which is a load. Electric power stored in the battery 230 is used to drive a motor, etc., not illustrated in the drawings.

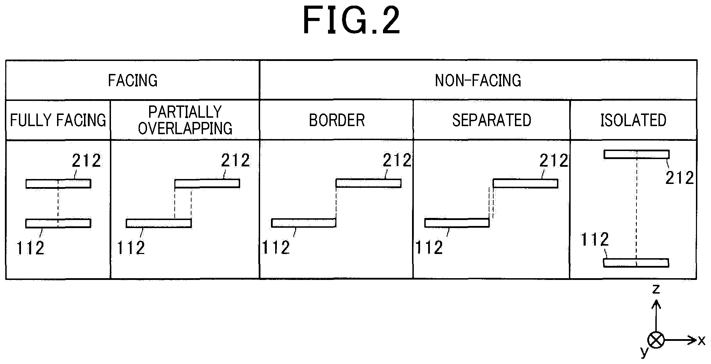

States in which the power receiving coil 212 faces the power transmitting coil 112 (hereinafter also referred to as the "facing states") include a "fully facing state" and a "partially overlapping state", as illustrated in Fig. 2. States in which the power receiving coil 212 does not face the power transmitting coil 112 (hereinafter also referred to as the "non-facing states") include a "border state", a "separated state", and an "isolated state".

The "fully facing state" is a state in which the center of a coil surface of the power transmitting coil 112 matches the center of a coil surface of the power receiving coil and one of the coil surface of the power transmitting coil 112 and the coil surface of the power receiving coil 212 entirely overlaps the other. In this fully facing state, the facing area between the power transmitting coil 112 and the power receiving coil 212 is largest. Note that the "coil surface" is a surface surrounded by looped wiring and functioning as a looped coil. However, each of the power transmitting coil and the power receiving coil is not limited to the looped coil and may be a solenoid coil. The "partially overlapping state" is a state in which there are partially overlapping surfaces as a result of relative misalignment of the coil surface of the power receiving coil 212 with respect to the coil surface of the power transmitting coil 112 and the facing area is smaller than the facing area between the power transmitting coil 112 and the power receiving coil 212 in the fully facing state. The "border state" is a state in which an edge of the coil surface of the power transmitting coil 112 and an edge of the coil surface of the power receiving coil 212 overlap as a result of relative misalignment of the coil surface of the power receiving coil 212 with respect to the coil surface of the power transmitting coil 112 without overlap; this state is obtained when the facing area is reduced to zero. The "separated state" is a state in which the coil surface of the power transmitting coil 112 and the coil surface of the power receiving coil 212 are completely separate as a result of relative misalignment of the coil surface of the power receiving coil 212 with respect to the coil surface of the power transmitting coil 112 without overlap. The "isolated state" is a state in which the power transmitting coil 112 and the power receiving coil 212 are isolated at a distance not less than such a distance that the coils even in the facing state can be treated as not being electromagnetically coupled with an extremely small coupling coefficient. In contrast, the distance between the power transmitting coil 112 and the power receiving coil 212 in the aforementioned facing state is less than or equal to a predetermined distance at which the coils in the fully facing state couple with each other with a coupling coefficient greater than or equal to a predetermined value.

As illustrated in Fig. 1, the power transmitting coil 112 facing the power receiving coil 212 is supplied with the alternating-current power from the power transmitting circuit 130 as described later. Subsequently, when the electromagnetic coupling between the power transmitting coil 112 and the power receiving coil 212 occurs, the alternating-current power is transmitted from the power transmitting coil 112 to the power receiving coil 212. The alternating-current power transmitted to the power receiving coil 212 is used to charge the battery 230 via the power receiving circuit 220. In contrast, the power transmitting coil 112 not facing the power receiving coil 212 is not supplied with the alternating-current power from the power transmitting circuit 130 as described later.

Impedance Z110 of the power transmitting resonant circuit 110 as a single unit is represented by the following expression (1). Similarly, impedance Z210 of the power receiving resonant circuit 210 as a single unit is represented by the following expression (2).
[Math. 1]
**[Math. 1]**

$$Z110 = j \left( \omega Lt - \frac{1}{\omega Ct} \right) \quad \cdots (1)$$

[Math. 2]
[Math. 2]

$$Z210 = j \left( \omega Lr - \frac{1}{\omega Cr} \right) \quad \cdots (2)$$

The resonance condition for the power transmitting resonant circuit 110 is that $(\omega Lt - 1 / (\omega ct)) = 0$ in the above expression (1) be satisfied. The resonance condition for the power receiving resonant circuit 210 is that $(\omega Lr - 1 / (\omega cr)) = 0$ in the above expression (2) be satisfied. In view of this, when the power transmitting coil 112 and the power receiving coil 212 face each other and electric power is transmitted from the power transmitting resonant circuit 110 to the power receiving resonant circuit 210, inductance Lt of the power transmitting coil 112 and capacitance Ct of the power transmitting resonant capacitor 116 are set so that the resonance condition for the power transmitting resonant circuit 110 is satisfied and a resonant frequency frt of the power transmitting resonant circuit 110 matches a fundamental frequency fsw of the alternating-current power. Similarly, inductance Lr of the power receiving coil 212 and capacitance Cr of the power receiving resonant capacitor 216 are set so that the resonance condition for the power receiving resonant circuit 210 is satisfied and a resonant frequency frr of the power receiving resonant circuit 210 matches the fundamental frequency fsw of the alternating-current power. Note that in the following description, the inductance Lt of the power transmitting coil 112 that satisfies the resonance condition is denoted as L1, and the capacitance Ct of the power transmitting resonant capacitor 116 that satisfies the resonance condition is denoted as C1. The inductance Lr of the power receiving coil 212 that satisfies the resonance condition is denoted as L2, and the capacitance Cr of the resonant capacitor that satisfies the resonance condition is denoted as C2. Note that in the following description, the inductance L1, L2 will also be referred to as "resonant inductance L1, L2", and the capacitance C1, C2 will also be referred to as "resonant capacitance C1, C2". The resonant frequency frt of the power transmitting resonant circuit 110 is represented by the following expression (3a), and the resonant frequency frr of the power receiving resonant circuit 210 is represented by the following expression (3b).

[Math. 3]

[Math. 3]

$$fsw = frt = \frac{1}{2\pi\sqrt{L1C1}} \quad \cdots(3a)$$

$$= frr = \frac{1}{2\pi\sqrt{L2C2}} \quad \cdots(3b)$$

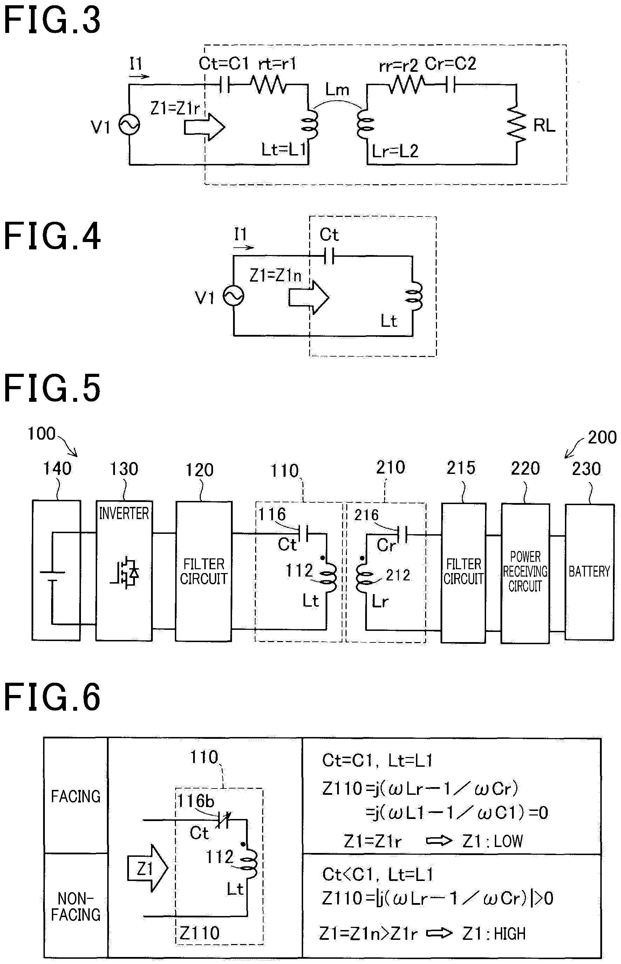

Here, when the power transmitting coil 112 and the power receiving coil 212 face each other and electric power is transmitted from the power transmitting resonant circuit 110 to the power receiving resonant circuit 210 (in the facing state), the contactless power feeding device 100 and the power receiving device 200 (refer to the top stage of Fig. 1) can be expressed as an equivalent circuit illustrated in Fig. 3. In these expressions, Lm is mutual inductance between the power transmitting coil 112 and the power receiving coil 212, rt is resistance of the power transmitting coil 112, rr is resistance of the power receiving coil 212, and RL is a load equivalent to the power receiving circuit 220 and the battery 230.

In the equivalent circuit illustrated in Fig. 3, input impedance Z1 (= V1 / I1) of the power transmitting resonant circuit 110 is represented by the following expression (4).

[Math. 4]

**[Math. 4]**

$$Z1 = \frac{[rt + j(\omega Lt - \frac{1}{\omega Ct})][rr + RL + j(\omega Lr - \frac{1}{\omega Cr})] + \omega^2 Lm^2}{rr + RL + j(\omega Lr - \frac{1}{\omega Cr})}$$

$$\cdots(4)$$

As mentioned above, input impedance Z1 = Z1r where the resonance conditions for the power transmitting resonant circuit 110 and the power receiving resonant circuit 210 are satisfied is represented by the following expression (5a) when Lt = L1, Ct = C1, Lr = L2, and Cr = C2 are assigned to the above expression (4). Note that in the following expression (5a), it is assumed that rt = r1 and rr = r2, which reflect Lt = L1 and Lr = L2.

[Math. 5]

[Math. 5]

$$Z1r = \frac{[r1 + j(\omega L1 - \frac{1}{\omega C1})][r2 + RL + j(\omega L2 - \frac{1}{\omega C2})] + \omega^2 Lm^2}{r2 + RL + j(\omega L2 - \frac{1}{\omega C2})}$$

$$\cdots(5a)$$

$$= \frac{r1(r2 + RL) + \omega^2 Lm^2}{r2 + RL} \quad \cdots(5b)$$

$$= \frac{RL + \omega^2 Lm^2}{RL} \quad \cdots(5c)$$

In the above expression (5a), the imaginary term is "0" because of resonance; thus, the input impedance Z1r is represented by the above expression (5b). Furthermore, since r1 « RL and R2 << RL are generally true, the input impedance Z1r is represented by the above expression (5c). Therefore, in the state in which the power transmitting coil 112 and the power receiving coil 212 face each other, the power transmitting circuit 130 (Fig. 3) outputs, to the power transmitting resonant circuit 110, the alternating-current power corresponding to the input impedance Z1r represented by the above expression (5b) or (5c). Subsequently, the alternating-current power is transmitted from the power transmitting resonant circuit 110 to the power receiving resonant circuit 210. Hereinafter, the input impedance Z1 = Z1r in the state in which the power transmitting coil 112 and the power receiving coil 212 face each other will also be referred to as "input impedance Z1 in the facing state".

On the other hand, a segment in the contactless power feeding device 100 in the state in which the power transmitting coil 112 and the power receiving coil 212 do not face each other and no electric power is transmitted from the power transmitting resonant circuit 110 to the power receiving resonant circuit 210 (refer to the bottom stage of Fig. 3) can be expressed as an equivalent circuit illustrated in Fig. 5. In the equivalent circuit illustrated in Fig. 5, the input impedance Z1 (= V1 / I1) = Z1n of the power transmitting resonant circuit 110, which is substantially the same as the impedance Z110 of the power transmitting resonant circuit 110 as a single unit, is represented by the following expression (6). Hereinafter, the input impedance Z1 = Z1n in the state in which the power transmitting coil 112 and the power receiving coil 212 do not face each other will also be referred to as "input impedance Z1 in the non-facing state".
[Math. 6]
**[Math. 6]**

$$Z1n = Z110 = \left( \omega Lt - \frac{1}{\omega Ct} \right) \quad \cdots (6)$$

At least one of Lt < L1 or Lt > L1 and Ct < C1 in the condition of the input impedance Z1 = Z1n in the non-facing state represented by the above expression (6) leads to loss of the resonance state (the state satisfying Z1n = Z110 = 0) of the power transmitting resonant circuit 110. At this time, the input impedance Z1 in the non-facing state can be increased from Z1 = Z1n = 0 to Z1 = Z1n > 0 to be greater than the input impedance Z1 = Z1r in the facing state. Thus, the electric current supplied for the input impedance Z1 = Z1n in the non-facing state is set less than the electric current supplied for the input impedance Z1 = Z1r in the facing state.

With the configuration described thus far, in the state in which the power receiving coil 212 of the power receiving device 200 faces the power transmitting coil 112 of the power transmitting resonant circuit 110, when the power transmitting resonant circuit 110 resonates, the input impedance Z1 is set low to satisfy Z1 = Z1r. Furthermore, in the state in which the power receiving coil 212 does not face the power transmitting coil 112, when the power transmitting resonant circuit 110 does not resonate, the input impedance Z1 is set high to satisfy Z1 = Z1n > Z1r. Thus, when the power transmitting coil 112 and the power receiving coil 212 are in the facing state, the power transmitting circuit 130 can supply a large electric current corresponding to the relatively low input impedance Z1 = Z1r. On the other hand, when the power transmitting coil 112 and the power receiving coil 212 are in the non-facing state, the power transmitting circuit 130 can reduce the electric current supply according to the relatively high input impedance Z1 = Z1n. Thus, loss at the power transmitting coil 112 that does not face the power receiving coil 212 can be reduced and magnetic flux leakage from the power transmitting coil 112 that does not face the power receiving coil 212 can be reduced without the use of large components such as the electric current control element of the prior art. Furthermore, it is possible to omit a structure for switching between transmitting and not transmitting electric power from the power transmitting circuit 130 to the power transmitting coil 112 of the power transmitting resonant circuit 110 depending on the facing or non-facing state.

Note that as illustrated in Fig. 5, a filter circuit 120 may be provided between the power transmitting resonant circuit 110 and the power transmitting circuit 130. The filter circuit 120 is used to reduce high-frequency noise components such as switching noise included in the alternating-current power supplied from the power transmitting circuit 130. Various filter circuits such as an immittance filter circuit, a low-pass filter circuit, and a band-pass filter circuit can be used as the filter circuit 120. The degree of the filter circuit may be a degree of 2, may be a degree of 3, or may be a degree of 4 or more. The degree of the filter circuit is not limited as long as noise to be removed can be reduced to a desired level. Note that in the configuration illustrated in Fig. 1 in which the filter circuit is not included, the power transmitting resonant circuit 110 corresponds to the "power transmitting resonator", and in the configuration illustrated in Fig. 5 in which the filter circuit is included, the filter circuit 120 and the power transmitting resonant circuit 110 correspond to the "power transmitting resonator". Note that the power transmitting resonant circuit 110 provided in the configuration in which the filter circuit is included can be treated in substantially the same manner as in the configuration in which the filter circuit is not included.

Furthermore, a filter circuit 215 for reducing high-frequency noise components may be provided between the power receiving resonant circuit 210 and the power receiving circuit 220, as with the filter circuit 120 on the power transmitting side. Note that the filter circuit 215 on the power receiving side can be applied even in a configuration in which the filter circuit 120 is not provided on the power transmitting side. The filter circuit 120 on the power transmitting side can be applied even in a configuration in which the filter circuit 215 is not provided on the power receiving side.

B. Second Embodiment:

The second embodiment describes the configuration described in the first embodiment in which the input impedance $Z1$ is reduced to satisfy $Z1 = Z1r$ (refer to the above expression (5c)) in the facing state and is increased to satisfy $Z1 = Z1n > Z1r$ (refer to the above expression (6)) (hereinafter also referred to as a "configuration in which the input impedance $Z1$ is changeable"). The second embodiment is obtained by applying, as the configuration in which the input impedance $Z1$ is changeable, a configuration in which a power transmitting resonant capacitor 116b, which is a variable capacitor with variable capacitance, is used as illustrated in Fig. 6.

The capacitance $Ct$ of the variable capacitor in the facing state is set to the resonant capacitance $C1$, which satisfies the resonance condition, so as to place the power transmitting resonant circuit 110 in the resonance state, and the capacitance $Ct$ of the variable capacitor in the non-facing state is set to capacitance less than the resonant capacitance $C1$ so as to place the power transmitting resonant circuit 110 out of the resonance state.

A device with the capacitance $Ct$ variable from capacitance less than the resonant capacitance $C1$ to the resonant capacitance $C1$ according to an increase in the magnetic flux that is generated due to an increase in the electric current flowing to the power transmitting coil 112 can be used as the variable capacitor. For example, a device that uses the electromagnetic effect, the magnetic induction effect, the magnetic capacitance effect, and the like (hereinafter referred to as a "variable capacitor that uses the electromagnetic effect, etc.") can be used.

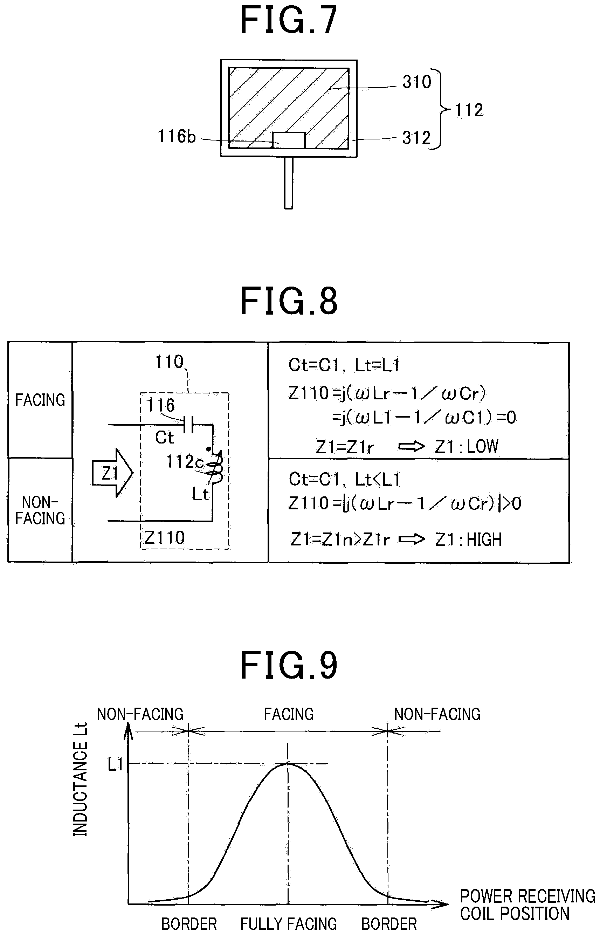

Note that the power transmitting resonant capacitor 116b which is the variable capacitor that uses the electromagnetic effect, etc., is disposed as illustrated in Fig. 7. Specifically, the power transmitting resonant capacitor 116b is disposed inward of looped wiring 312 wound around a core 310 of the power transmitting coil 112, on a surface of the core 310 that corresponds to the coil surface extending along the looped wiring 312. When the power transmitting resonant capacitor 116b is disposed in this manner, it is possible to increase the sensitivity of a magnetic flux that is generated by the power transmitting coil 112 upon change of the relationship of the power receiving coil 212 with respect to the power transmitting coil 112 from the non-facing state to the facing state, and the capacitance $Ct$ of the power transmitting resonant capacitor 116b can be changed from $Ct < C1$ to $Ct = C1$ according to a change in the magnetic flux.

As described above, in the configuration according to the second embodiment, the input impedance $Z1$ of the power transmitting resonant circuit 110 can also be reduced to satisfy $Z1 = Z1r$ (refer to the above expression (5c)) in the facing state and increased to satisfy $Z1 = Z1n > Z1r$ (refer to the above expression (6)) in the non-facing state. Thus, the advantageous effects described in the first embodiment can be obtained in the second embodiment as well.

C. Third Embodiment:

The third embodiment is obtained by applying, as the configuration described in the first embodiment in which the input impedance $Z1$ is changeable, a configuration in which a power transmitting coil 112c, which is a variable coil with variable inductance, is used as illustrated in Fig. 8.

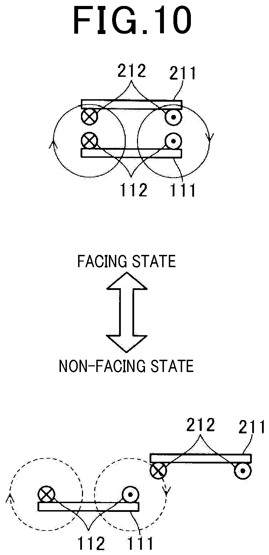

In contactless power feeding that is performed with a small gap length between a power transmitting coil and a power transmitting coil, the value of the inductance $Lt$ of the power transmitting coil changes significantly depending on the positional relationship of the power receiving coil with respect to the power transmitting coil. For example, Fig. 9 shows properties in which the inductance $Lt$ in the fully facing position is the resonant inductance $L1$ satisfying the resonance condition, and as the coils are shifted from the fully facing state, the inductance $Lt$ is reduced, and the inductance $Lt$ in the non-facing state is significantly less than the resonant inductance $L1$. This property change is due to the following reason. Specifically, as illustrated in Fig. 10, in the facing state, a portion of the magnetic flux generated from the power transmitting coil 112 (looped solid lines) passes through a magnetic body 211 of the power receiving coil 212 having high permeability, and thus the power transmitting coil 112 has high inductance. In contrast, in the non-facing state, a portion of the magnetic flux generated from the power transmitting coil 112 (looped dash lines) passes through an air area having low permeability, and thus the power transmitting coil 112 has low inductance. Note that these properties are more prominent with a shorter distance (spacing) between the power transmitting coil and the power receiving coil and a greater coupling coefficient. Therefore, a coupling coefficient $k$ in the fully facing state is preferably set to satisfy $k \geq 0.1$.

Accordingly, on a premise that the power transmitting coil 112 (refer to Figs. 1 and 5) having the above-described properties is used, the power transmitting coil 112 can be the power transmitting coil 112c which is a variable coil with variable inductance. Furthermore, in the facing state, the inductance $Lt$ of the power transmitting coil 112c is set to the resonant inductance $L1$ so as to place the power transmitting resonant circuit 110 in the resonance state. Thus, in the facing state, the input impedance Z1 can be reduced to satisfy Z1 = Z1r (refer to the above expression (5c)). In the non-facing state, the inductance Lt of the power transmitting coil 112c is set to a value significantly smaller than the resonant inductance L1 so as to place the power transmitting resonant circuit 110 out of the resonance state. Thus, in the non-facing state, the input impedance Z1 can be increased to satisfy Z1 = Z1n > Z1r (refer to the above expression (6)). As a result, the advantageous effects described in the first embodiment can be obtained in the third embodiment as well.

Note that both this configuration in which the inductance of the power transmitting coil is variable and the configuration according to the second embodiment in which the capacitance of the resonant capacitor is variable may be applied. In this case, in the non-facing state, the inductance of the power transmitting coil is reduced, and the capacitance of the resonant capacitor is reduced, leading to a further increase in the input impedance Z1 = Z1n in the non-facing state and allowing a reduction in the electric current flowing from the power transmitting circuit 130 to the power transmitting resonant circuit 110. Thus, the advantageous effects described in the first embodiment can be more effectively obtained. Furthermore, it is possible to reduce the range of changes in the capacitance of the resonant capacitor required to set the input impedance in the non-facing state to greater than or equal to a target value and set the electric current flowing to the power transmitting resonant circuit in the non-facing circuit to less than or equal to a target value; thus, settings for the capacitance of the resonant capacitor are facilitated.

D. Fourth Embodiment:

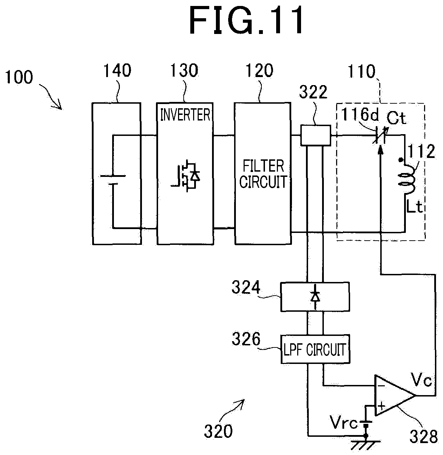

The fourth embodiment is obtained by applying, as the configuration described in the first embodiment in which the input impedance Z1 is changeable, a configuration in which a power transmitting resonant capacitor 116d, which is a variable capacitor with variable capacitance, is used as illustrated in Fig. 11. This is the same as the second embodiment in terms of using a variable capacitor as the resonant capacitor. However, the variable capacitor used as the power transmitting resonant capacitor 116b according to the second embodiment is a variable capacitor that uses the electromagnetic effect, etc. In contrast, the variable capacitor used as the power transmitting resonant capacitor 116d according to the fourth embodiment is a commonly used variable capacitor with the capacitance Ct that changes according to control input given thereto, that is, a control voltage Vc in the present example. Note that the filter circuit 120 need not be provided.

Furthermore, as illustrated in Fig. 11, a variable control circuit 320 which controls the capacitance Ct of the power transmitting resonant capacitor 116d is provided in the contactless power feeding device 100 according to the fourth embodiment. The variable control circuit 320 includes an electric current sensor 322, a rectifier circuit 324, a low-pass filter circuit 326 (hereinafter also referred to as a "LPF circuit 326"), and a voltage conversion circuit 328.

The electric current sensor 322 detects an electric current flowing in one wire that connects the filter circuit 120 and the power transmitting resonant circuit 110, that is, an electric current flowing to the power transmitting coil 112, and outputs the detected electric current as a detected voltage. Note that the electric current sensor 322 may detect an electric current flowing in the other wire. The rectifier circuit 324 rectifies the detected voltage. The LPF circuit 326 removes a high-frequency component from the detected voltage. The voltage conversion circuit 328 converts the detected voltage into a control voltage Vc for controlling the capacitance Ct of the power transmitting resonant capacitor 116 according to the magnitude of the difference between the detected voltage and a reference voltage Vrc using a differential amplifier circuit.

The electric current detected by the electric current sensor 322 is very small when the power receiving coil 212 is in the non-facing state with respect to the power transmitting coil 112, and increases as the state changes from the non-facing state to the facing state and further to the fully facing state. Therefore, the detected voltage from the electric current sensor 322 changes according to this change in the electric current.

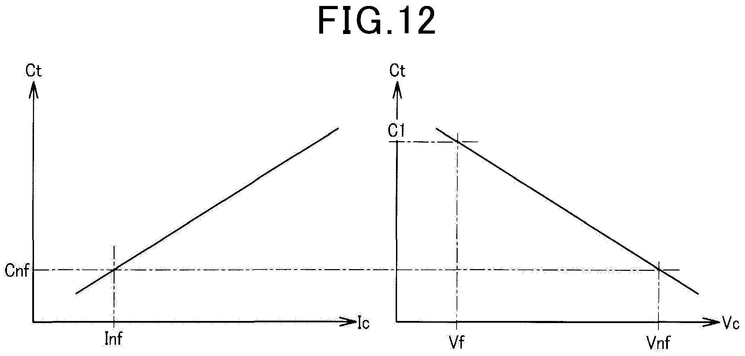

As illustrated in the graph on the right-hand side in Fig. 12, the capacitance Ct of the power transmitting resonant capacitor 116d is the resonant capacitance C1 in the fully facing state and is set to a capacitance Cnf less than the preset resonant capacitance C1 in the border state (refer to Fig. 2) which is the non-facing state.

Assume that the variable capacitor used as the power transmitting resonant capacitor 116d has properties in which the capacitance is reduced as the control voltage Vc increases. In this case, as illustrated in the graph on the right-hand side in Fig. 12, the control voltage Vc to be output from the voltage conversion circuit 328 (refer to Fig. 11) is controlled to be a voltage Vf corresponding to Ct = C1 at the detected voltage in the fully facing state and be a voltage Vnf (Vnf > Vf) corresponding to Ct = Cnf at the detected voltage in the border state. Therefore, in line with this control of the control voltage Vc, the voltage conversion circuit 328 is configured to receive the detected voltage by the negative input of the differential amplifier circuit so that the control voltage Vc to be output is reduced as the detected voltage from the electric current sensor 322 increases (refer to Fig. 11). Note that if the variable capacitor used as the power transmitting resonant capacitor 116d has the opposite properties, it is sufficient that the voltage conversion circuit 328 be configured to receive the detected voltage by the positive input of the differential amplifier circuit.

Note that the capacitance Cnf of the power transmitting resonant capacitor 116d is preferably set to the capacitance Ct corresponding to a predetermined electric current Inf in an electric current Ic detected by the electric current sensor 322, as illustrated on the left-hand side in Fig. 12. Note that the predetermined electric current Inf is preferably set from the perspective of reducing magnetic flux leakage, loss, etc., that are caused due to the electric current flowing to the power transmitting coil 112 in the non-facing state.

The variable control circuit 320 is capable of controlling the capacitance Ct of the power transmitting resonant capacitor 116d, depending on whether and how the power receiving coil 212 and the power transmitting coil 112 face each other. Thus, in the configuration according to the fourth embodiment, the input impedance Z1 of the power transmitting resonant circuit 110 can also be reduced to satisfy $Z1 = Z1r$ (refer to the above expression (5c)) in the facing state and increased to satisfy $Z1 = Z1n > Z1r$ (refer to the above expression (6)) in the non-facing state. Thus, the advantageous effects described in the first embodiment can be obtained in the fourth embodiment as well.

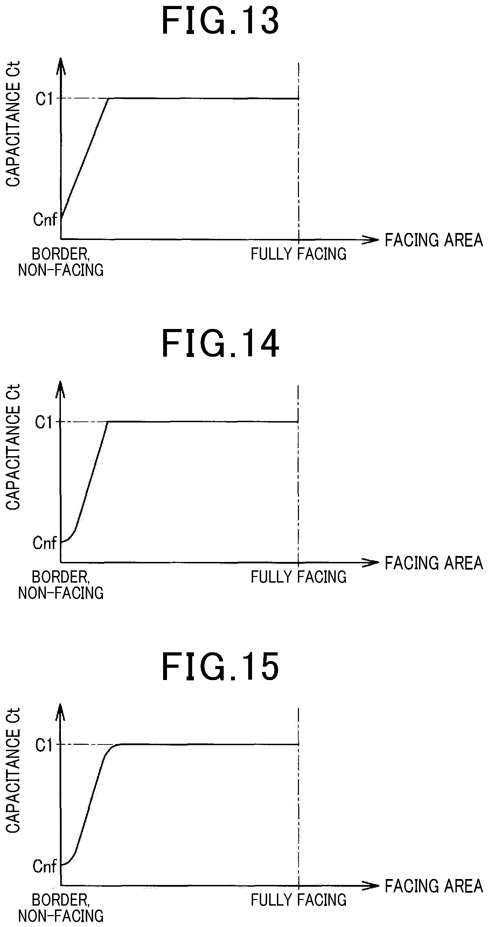

Note that the capacitance Ct of the power transmitting resonant capacitor 116d is preferably set so as to change linearly when the facing area in which the power receiving coil 212 faces the power transmitting coil 112 is reduced from the area in the fully facing area, which is largest, to the area in the border state, which is zero, as illustrated in Figs. 13 to 15, for example. In this manner, the input impedance Z1 can be gradually increased; thus, the occurrences of a surge current or a surge voltage in the electric current or the voltage that is applied to the power transmitting coil 112 due to a sharp increase in the impedance can be reduced. Note that the change in the capacitance Ct is not limited to the properties illustrated in Figs. 13 to 15; it is sufficient that the capacitance Ct be set so as to change linearly when the facing area is reduced from the area in the fully facing area, which is largest, to the area in the border state, which is zero, and this change can take various shapes.

Note that the configuration according to the third embodiment in which the power transmitting coil is variable may be applied to the fourth embodiment. In this case, in the non-facing state, the inductance of the power transmitting coil is reduced, and the capacitance of the resonant capacitor is reduced, allowing a further increase in the input impedance $Z1 = Z1n$ in the non-facing state. Thus, the advantageous effects described in the first embodiment can be more effectively obtained. Furthermore, it is possible to reduce the range of changes in the capacitance of the resonant capacitor required to set the input impedance in the non-facing state to greater than or equal to a target value and set the electric current flowing to the power transmitting resonant circuit in the non-facing circuit to less than or equal to a target value; thus, settings for the capacitance of the resonant capacitor are facilitated.

E. Fifth Embodiment:

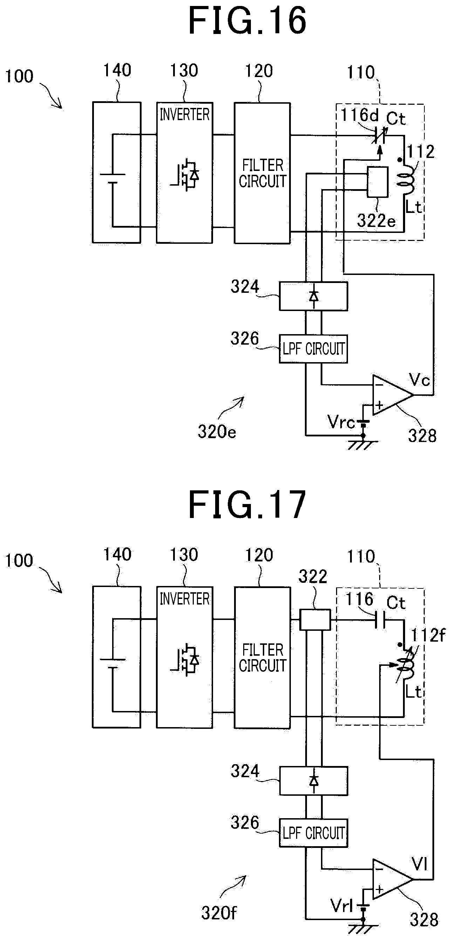

The fifth embodiment is obtained by applying a configuration in which the power transmitting resonant capacitor 116d is used as with the configuration according to the fourth embodiment (refer to Fig. 10), as illustrated in Fig. 16. The fifth embodiment is different from the fourth embodiment in that a variable control circuit 320e is included instead of the variable control circuit 320 according to the fourth embodiment. The variable control circuit 320e is the same as the variable control circuit 320 except that a magnetic field sensor 322e is included instead of the electric current sensor 322 in the variable control circuit 320. Note that the filter circuit 120 need not be provided.

As with the power transmitting resonant capacitor 116b which uses the electromagnetic effect, etc., described in the second embodiment (refer to Fig. 7), the magnetic field sensor 322e is disposed inward of the looped wiring 312 wound around the core 310 of the power transmitting coil 112, on a surface of the core 310 that corresponds to the coil surface extending along the looped wiring 312. This allows the magnetic field sensor 322e to detect a change in the magnetic flux that is generated by the power transmitting coil 112 depending on whether and how the power receiving coil 212 and the power transmitting coil 112 face each other, and output the detected voltage, as with the electric current sensor 322.

Similar to the variable control circuit 320 according to the fourth embodiment, the variable control circuit 320e according to the fifth embodiment can also control the capacitance Ct of the power transmitting resonant capacitor 116d, depending on whether and how the power receiving coil 212 and the power transmitting coil 112 face each other. Thus, in the configuration according to the fifth embodiment, the input impedance Z1 of the power transmitting resonant circuit 110 can also be reduced to satisfy $Z1 = Z1r$ (refer to the above expression (5c)) in the facing state and increased to satisfy $Z1 = Z1n > Z1r$ (refer to the above expression (6)) in the non-facing state. Thus, the advantageous effects described in the first embodiment can be obtained in the fifth

embodiment as well.

Note that the configuration according to the third embodiment in which the power transmitting coil is variable may be applied to the fifth embodiment. In this case, in the non-facing state, the inductance of the power transmitting coil is reduced, and the capacitance of the resonant capacitor is reduced, allowing a further increase in the input impedance $Z1 = Z1n$ in the non-facing state. Thus, the advantageous effects described in the first embodiment can be more effectively obtained. Furthermore, it is possible to reduce the range of changes in the capacitance of the resonant capacitor required to set the input impedance in the non-facing state to greater than or equal to a target value and set the electric current flowing to the power transmitting resonant circuit in the non-facing circuit to less than or equal to a target value; thus, settings for the capacitance of the resonant capacitor are facilitated.

F. Sixth Embodiment:

The sixth embodiment is obtained by applying, as the configuration described in the first embodiment in which the input impedance Z1 is changeable, a configuration in which a power transmitting coil 112f, which is a variable coil with variable inductance, is used as illustrated in Fig. 17. The sixth embodiment is the same as the third embodiment in terms of using a variable coil as the power transmitting coil. However, the power transmitting coil 112c according to the third embodiment uses the properties in which the inductance changes depending on whether and how the power receiving coil and the power transmitting coil face each other. In contrast, the variable coil used as the power transmitting coil 112f according to the sixth embodiment is a variable coil with the inductance Lt that changes according to control input given thereto, that is, a control voltage V1 in the present example. As the variable coil, various variable coils can be used such as a variable coil with inductance that changes when the number of turns of the coil is changed according to the control voltage VI, for example. Note that the filter circuit 120 need not be provided.

As illustrated in Fig. 17, the contactless power feeding device 100 according to the sixth embodiment includes a variable control circuit 320f which controls the inductance Lt of the power transmitting coil 112f. The variable control circuit 320f is the same as the variable control circuit 320 according to the fourth embodiment (refer to Fig. 11). However, the reference voltage to be input to the voltage conversion circuit 328 and the control voltage to be output from the voltage conversion circuit 328, which are used to control the inductance Lt of the power transmitting coil 112f, are referred to as a reference voltage Vrl and a control voltage VI, in order to distinguish from the reference voltage Vrc and the control voltage Vc in the variable control circuit 320.

The variable control circuit 320f is capable of controlling the inductance Lt of the power transmitting coil 112f, depending on whether and how the power receiving coil 212 and the power transmitting coil 112 face each other. For example, the inductance Lt is set to satisfy Lt = L1 in the facing state and is set to satisfy Lt > L1 in the non-facing state. Thus, in the configuration according to the sixth embodiment, the input impedance Z1 of the power transmitting resonant circuit 110 can also be reduced to satisfy Z1 = Z1r (refer to the above expression (5c)) in the facing state and increased to satisfy Z1 = Z1n > Z1r (refer to the above expression (6)) in the non-facing state. Thus, the advantageous effects described in the first embodiment can be obtained in the sixth embodiment as well. Note that when the value of the inductance Lt of the power transmitting coil 112 is changed to increase the input impedance Z1 in the non-facing state as described above, an increase in the size of the power transmitting coil 112 is problematic. In contrast, in changing the value of the capacitance Ct of the power transmitting resonant capacitor 116 to increase the input impedance Z1 in the non-facing state as in the fourth and fifth embodiments, it is sufficient that the capacitance Ct of the power transmitting resonant capacitor 116 be reduced. Therefore, the value of the capacitance Ct of the power transmitting resonant capacitor 116 can be changed without causing an increase in the size of the power transmitting resonant capacitor 116.

Note that the variable control circuit in which the electric current sensor 322 is used has thus far been described as an example of the variable control circuit 320f, but a variable control circuit in which the magnetic field sensor 322e is used as in the fifth embodiment can be applied.

G. Seventh Embodiment:

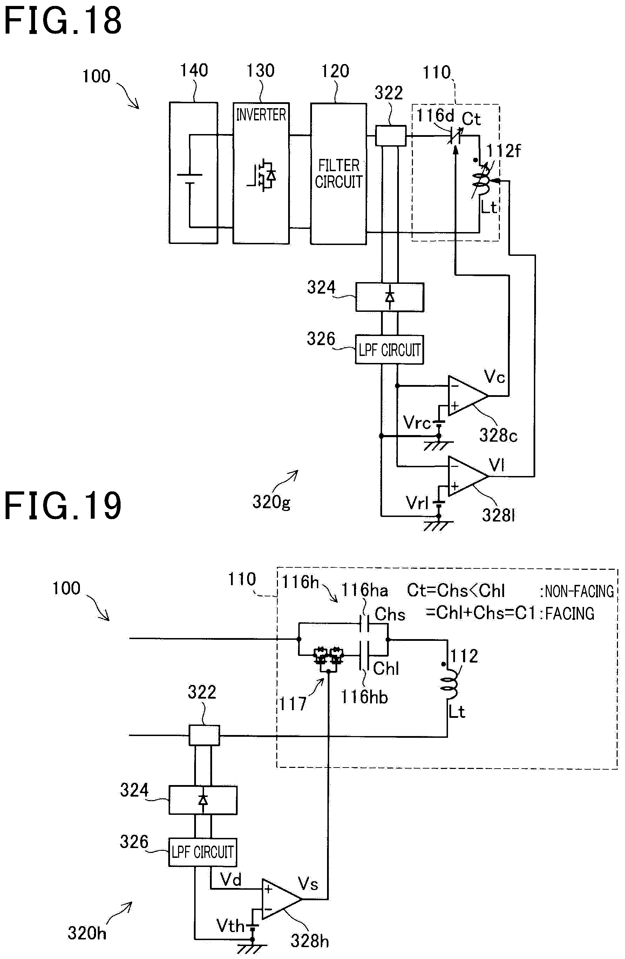

The seventh embodiment is obtained by applying both the configuration according to the fourth embodiment in which the power transmitting resonant capacitor 116d, which is a variable capacitor, is used (refer to Fig. 11) and the configuration according to the sixth embodiment in which the power transmitting coil 112f, which is a variable coil, is used (refer to Fig. 17), as illustrated in Fig. 18. A variable control circuit 320g includes the electric current sensor 322, the rectifier circuit 324, the LPF circuit 326, and voltage conversion circuits 328c, 3281. The voltage conversion circuit 328c is the same as the voltage conversion circuit 328 according to the fourth embodiment that outputs the control voltage Vc for the power transmitting resonant capacitor 116d, and the voltage conversion circuit 3281 is the same as the voltage conversion circuit 328 according to the sixth embodiment that outputs the control voltage V1 for the power transmitting coil 112f. Note that the filter circuit 120 need not be provided.

The variable control circuit 320g is capable of controlling the capacitance Ct of the power transmitting resonant capacitor 116d and the inductance Lt of the power transmitting coil 112f, depending on whether and how the power receiving coil 212 and the power transmitting coil 112 face each other. Thus, in the configuration according to the seventh embodiment, the input impedance Z1 of the power transmitting resonant circuit 110 can also be reduced to satisfy Z1 = Z1r (refer to the above expression (5c)) in the facing state and increased to satisfy Z1 = Z1n > Z1r (refer to the above expression (6)) in the non-facing state. In addition, the input impedance Z1 = Z1n in the non-facing state can be further increased by controlling both the capacitance Ct of the power transmitting resonant capacitor 116d and the inductance Lt of the power transmitting coil 112f. Thus, the advantageous effects described in the first embodiment can be more effectively obtained than in the fourth and sixth embodiments. Furthermore, it is possible to reduce the range of changes in the capacitance of the resonant capacitor required to set the input impedance in the non-facing state to greater than or equal to a target value and set the electric current flowing to the power transmitting resonant circuit in the non-facing circuit to less than or equal to a target value; thus, settings for the capacitance of the resonant capacitor are facilitated.

Note that the variable control circuit in which the electric current sensor 322 is used has thus far been described as an example of the variable control circuit 320g, but a variable control circuit in which the magnetic field sensor 322e is used as in the fifth embodiment (refer to Fig. 15) can be applied.

H. Eighth Embodiment:

The eighth embodiment is obtained by applying, as the configuration described in the first embodiment in which the input impedance Z1 is changeable, a configuration in which a power transmitting resonant capacitor 116h with capacitance variable by turning ON and OFF a switch is used as illustrated in Fig. 19. Note that Fig. 19 illustrates only the power transmitting resonant circuit 110 among the structural elements of the contactless power feeding device 100 illustrated in Fig. 1 or 5, together with a variable control circuit 320h which is used to change the value of the capacitance Ct of the power transmitting resonant capacitor 116h in the power transmitting resonant circuit 110, while the other structural elements are omitted therein.

As illustrated in Fig. 19, the power transmitting resonant capacitor 116h includes a first resonant capacitor 116ha and a second resonant capacitor 116hb arranged in parallel. The second resonant capacitor 116hb is connected in parallel with the first resonant capacitor 116ha when a bidirectional switch 117 connected in series with the second resonant capacitor 116hb is ON, and is disconnected when the bidirectional switch 117 is OFF. Therefore, the capacitance Ct of the power transmitting resonant capacitor 116h is capacitance Chs of the first resonant capacitor 116ha when the bidirectional switch 117 is OFF, and is the sum of the capacitance Chs of the first resonant capacitor 116ha and capacitance Chl of the second resonant capacitor 116hb, that is, Chs + Ch1, when the bidirectional switch 117 is ON.

The variable control circuit 320h is basically the same as the variable control circuit 320 (refer to Fig. 11) according to the fourth embodiment which includes the electric current sensor 322. The variable control circuit 320h may be substantially the same as the variable control circuit 320e (refer to Fig. 16) according to the fifth embodiment which includes the magnetic field sensor 322e. The voltage conversion circuit 328 which outputs the control voltage Vc corresponding to the magnitude of the difference between the detected voltage and the reference voltage Vrc is replaced by a voltage conversion circuit 328h in which a comparator that outputs a control voltage Vs corresponding to the magnitude relationship of a detected voltage Vd with respect to a threshold voltage Vth is used. Note that the threshold voltage Vth is preferably set to a start threshold value Vth_on when the state changes from the non-facing state to the facing state and the bidirectional switch 117 is to be turned ON, and is set to a stop threshold value Vth_off when the state changes from the facing state to the non-facing state and the bidirectional switch 117 is to be turned OFF.

When the detected voltage Vd is less than the threshold voltage Vth in the non-facing state, the voltage conversion circuit 328h outputs a control voltage Vs that turns OFF the bidirectional switch 117, and when the detected voltage Vd is greater than the threshold voltage Vth in the facing state, the voltage conversion circuit 328h outputs a control voltage Vs that turns ON the bidirectional switch 117. Accordingly, the capacitance Ct of the power transmitting resonant capacitor 116h is the capacitance Chs of the first resonant capacitor 116ha in the non-facing state and is the sum of the capacitance Chs of the first resonant capacitor 116ha and the capacitance Chl of the second resonant capacitor 116hb in the facing state. It is sufficient that the capacitance Chs of the first resonant capacitor 116ha and the capacitance Chl of the second resonant capacitor 116hb be set so that the capacitance Ct = (Chs + Chl) in the facing state is the resonant capacitance C1, the capacitance Ct = Chs in the non-facing state is less than the resonant capacitance C1, and Chs < Chl holds.

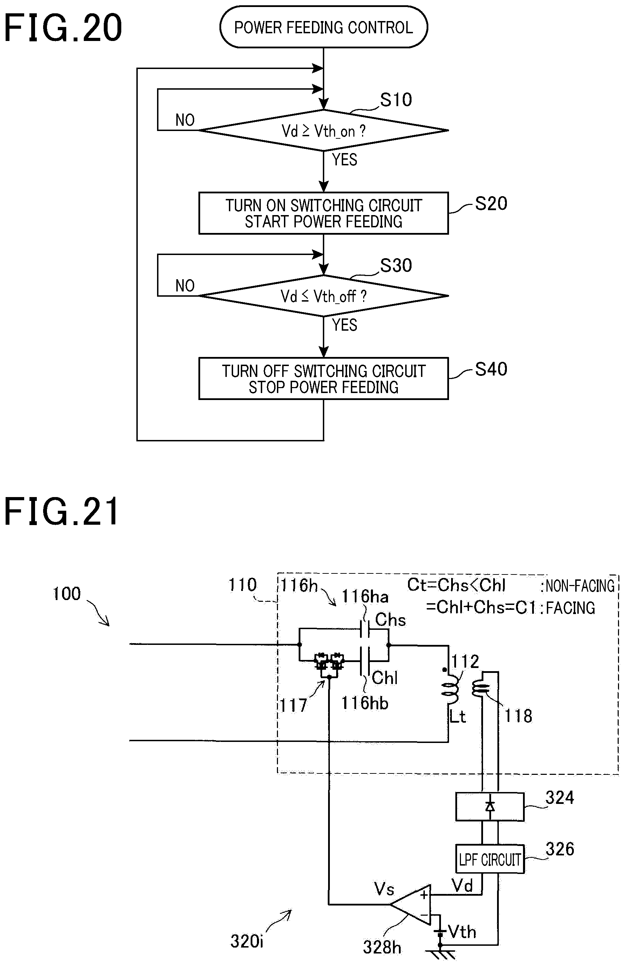

The variable control circuit 320h is capable of changing the value of the capacitance Ct of the power transmitting resonant capacitor 116h according to whether the power receiving coil 212 and the power transmitting coil 112 are in the facing state or in the non-facing state. This allows the variable control circuit 320h to automatically control supplying of electric power from the contactless power feeding device 100 to the power receiving device 200, as illustrated in Fig. 20. Specifically, when the variable control circuit 320h detects that the detected voltage Vd is greater than or equal to the start threshold value Vth_on which is the threshold voltage Vth and the state has changed from the non-facing state to the facing state (Step S10: YES), the variable control circuit 320h turns ON the switching circuit (the bidirectional switch 117) (Step S20) and reduces the input impedance Z1 of the power transmitting resonant circuit 110 to satisfy Z1 = Z1r (refer to the above expression (5c)). Thus, the supplying of electric power from the contactless power feeding device 100 to the power receiving device 200 can start. Subsequently, when the variable control circuit 320h detects that the detected voltage Vd is less than or equal to the stop threshold value Vth_off which is the threshold voltage Vth and the state has changed from the facing state to the non-facing state (Step S30: YES), the variable control circuit 320h turns OFF the switching circuit (Step S40) and increases the input impedance Z1 of the power transmitting resonant circuit 110 to satisfy Z1 = Z1n > Z1r (refer to the above expression (6)). Thus, the supplying of electric power from the contactless power feeding device 100 to the power receiving device 200 can stop.

Thus, in the configuration according to the eighth embodiment, the input impedance Z1 of the power transmitting resonant circuit 110 can also be reduced to satisfy Z1 = Z1r (refer to the above expression (5c)) in the facing state and increased to satisfy Z1 = Z1n > Z1r (refer to the above expression (6)) in the non-facing state. Thus, the advantageous effects described in the first embodiment can be obtained in the eighth embodiment as well. In changing the value of the capacitance Ct of the power transmitting resonant capacitor 116h to increase the input impedance Z1 in the non-facing state, it is sufficient that the capacitance Ct of the power transmitting resonant capacitor 116h be reduced. Therefore, the value of the capacitance Ct of the power transmitting resonant capacitor 116h can be changed without causing an increase in the size of the power transmitting resonant capacitor 116h.

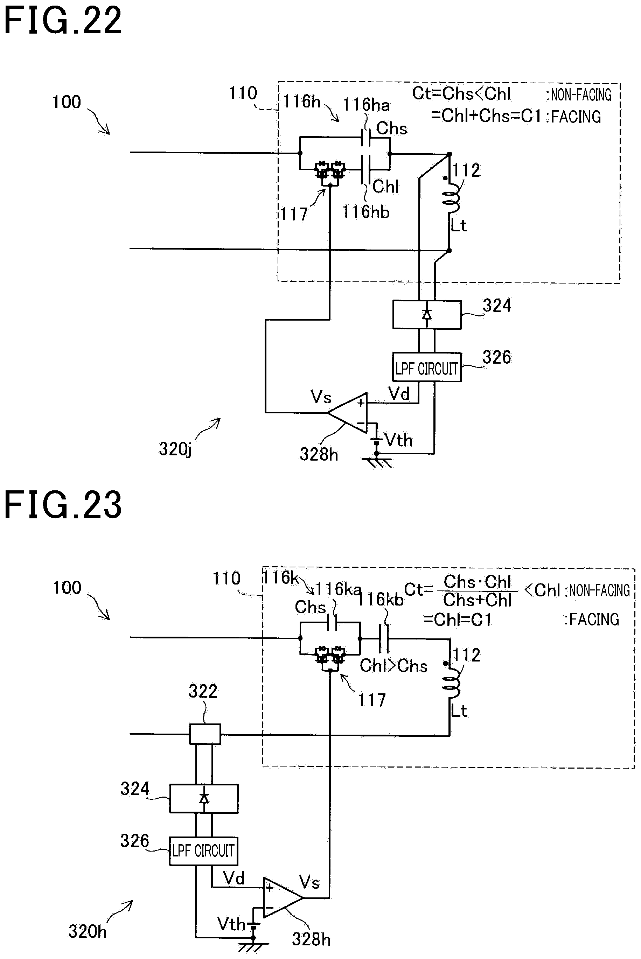

Note that the configuration of the variable control circuit for switching the directional switch 117 can be replaced by not only the configuration in which the electric current sensor 322 illustrated in Fig. 19 is used or the configuration in which the magnetic field sensor 322e illustrated in Fig. 16 is used, but also the configuration in which a variable control circuit 320i illustrated in Fig. 21 or a variable control circuit 320j illustrated in Fig. 22 is used.

The variable control circuit 320i includes a search coil 118 disposed facing the power transmitting coil 112. The variable control circuit 320i is configured to detect, as the detected voltage Vd, an alternating-current voltage generated between the terminals of the search coil 118 according to whether the power receiving coil 212 and the power transmitting coil 112 are in the facing state or in the non-facing state, and perform control to switch the bidirectional switch 117 by the control voltage Vs output according to the magnitude relationship of the detected voltage Vd with respect to the threshold voltage Vth.

The variable control circuit 320j is configured to detect, as the detected voltage Vd, an alternating-current voltage generated between the terminals of the power transmitting coil 112 according to whether the power receiving coil 212 and the power transmitting coil 112 are in the facing state or in the non-facing state, and perform control to switch the bidirectional switch 117 by the control voltage Vs output according to the magnitude relationship of the detected voltage Vd with respect to the threshold voltage Vth.

I. Ninth Embodiment:

The ninth embodiment is obtained by applying a configuration in which a power transmitting resonant capacitor 116k is used instead of the power transmitting resonant capacitor 116h (refer to Fig. 19) according to the eighth embodiment, as illustrated in Fig. 23. Note that similar to Fig. 19, Fig. 23 illustrates only the power transmitting resonant circuit 110 among the structural elements of the contactless power feeding device 100, together with the variable control circuit 320h which is used to change the value of the capacitance Ct of the power transmitting resonant capacitor 116k in the power transmitting resonant circuit 110, while the other structural elements are omitted therein.

As illustrated in Fig. 23, the power transmitting resonant capacitor 116k includes a first resonant capacitor 116ka and a second resonant capacitor 116kb arranged in series. The first resonant capacitor 116ka is connected in series with the second resonant capacitor 116kb when the bidirectional switch 117 connected in parallel with the first resonant capacitor 116ka is OFF, and is short-circuited when the bidirectional switch 117 is ON. Therefore, when the variable control circuit 320h turns ON the bidirectional switch 117 in the facing state, the capacitance Ct of the power transmitting resonant capacitor 116k is the capacitance Chl of the second resonant capacitor 116kb. In contrast, when the variable control circuit 320h turns OFF the bidirectional switch 117 in the non-facing state, the capacitance Ct of the power transmitting resonant capacitor 116k is the sum (Chs·Chl / (Chs + Chl)) of the reciprocal of the capacitance Chs of the first resonant capacitor 116ka and the reciprocal of the capacitance Chl of the second resonant capacitor 116kb. It is sufficient that the capacitance Chs of the first resonant capacitor 116ka and the capacitance Chl of the second resonant capacitor 116kb be set so that the capacitance Ct = Chl in the facing state is the resonant capacitance C1, the capacitance Ct = (Chs·Chl / (Chs + Chl)) in the non-facing state is less than the resonant capacitance C1, and Chl < Chs holds.

The variable control circuit 320h is capable of changing the value of the capacitance Ct of the power transmitting resonant capacitor 116k according to whether or not the power receiving coil 212 and the power transmitting coil 112 are in the facing state or in the non-facing state. This allows the variable control circuit 320h to automatically control supplying of electric power from the contactless power feeding device 100 to the power receiving device 200, as illustrated in Fig. 20.

As described above, in the configuration according to the ninth embodiment, the input impedance Z1 of the power transmitting resonant circuit 110 can also be reduced to satisfy Z1 = Z1r (refer to the above expression (5c)) in the facing state and increased to satisfy Z1 = Z1n > Z1r (refer to the above expression (6)) in the non-facing state. Thus, the advantageous effects described in the first embodiment can be obtained in the ninth embodiment as well. In changing the value of the capacitance Ct of the power transmitting resonant capacitor 116k to increase the input impedance Z1 in the non-facing state, it is sufficient that the capacitance Ct of the power transmitting resonant capacitor 116k be reduced. Therefore, the value of the capacitance Ct of the power transmitting resonant capacitor 116k can be changed without causing an increase in the size of the power transmitting resonant capacitor 116k.

Note that the configuration of the variable control circuit according to the ninth embodiment may be a configuration substantially the same as the variable control circuit 320e (refer to Fig. 16) in which the magnetic field sensor 322e is used, instead of the configuration of the variable control circuit 320h or the like in which the electric current sensor 322 is used, as described in the eighth embodiment. Furthermore, the variable control circuit according to the ninth embodiment may be the variable control circuit 320i configured to use the search coil 118 as illustrated in Fig. 21 or the variable control circuit 320j illustrated in Fig. 22 and configured to detect a voltage between the terminals of the power transmitting coil 112.

J. Tenth Embodiment:

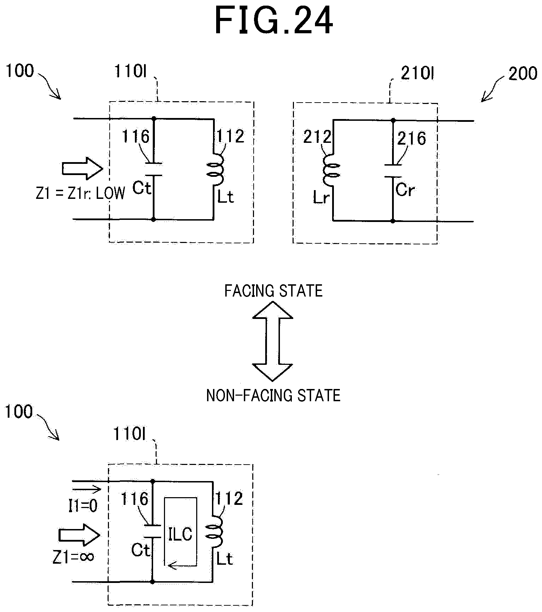

The power transmitting resonant circuit 110 in the contactless power feeding device 100 illustrated in Fig. 1 is a series resonant circuit including the power transmitting coil 112 and the power transmitting resonant capacitor 116 connected in series, and the power receiving resonant circuit 210 in the power receiving device 200 is also a series resonant circuit including the power receiving coil 212 and the power receiving resonant capacitor 216 connected in series. In contrast, as illustrated in Fig. 24, the power transmitting resonant circuit in the contactless power feeding device 100 may be a power transmitting resonant circuit 1101 which is a parallel resonant circuit including the power transmitting coil 112 and the power transmitting resonant capacitor 116 connected in parallel, and the power receiving resonant circuit in the power receiving device 200 may be a power receiving resonant circuit 2101 which is a parallel resonant circuit including the power receiving coil 212 and the power receiving resonant capacitor 216 connected in parallel.

The capacitance Ct of the power transmitting resonant capacitor 116 and the inductance Lt of the power transmitting coil 112 are set so that the power transmitting resonant circuit 1101 resonates in parallel in the facing state in which the power receiving coil 212 faces the power transmitting coil 112. In this case, in the facing state (refer to the top stage of Fig. 24), the power transmitting resonant circuit 1101 enters into the resonance state, the input impedance Z1 of the power transmitting resonant circuit 110 is reduced to satisfy Z1 = Z1r, and alternating-current power is supplied from the power transmitting circuit 130 to the power transmitting coil 112 and then supplied to the power receiving device 200 via the power receiving coil 212.

On the other hand, when the power receiving coil 212 and the power transmitting coil 112 are in the non-facing state (the bottom stage of Fig. 24), the resonance state of the power transmitting resonant circuit 1101 is lost, and the input impedance Z1 becomes infinite, allowing an input electric current I1 for the power transmitting resonant circuit 1101 to approach zero. Therefore, the power transmitting resonant circuit 1101 which is a parallel resonant circuit has greater advantageous effects than the power transmitting resonant circuit 110 which is a series resonant circuit, in terms of reducing the electric currents flowing from the power transmitting circuit, in other words, reducing the standby power consumption. However, in the case of the power transmitting resonant circuit 1101 which is a parallel resonant circuit, a leakage current ILC flows between the power transmitting resonant capacitor 116 and the power transmitting coil 112, and thus a leakage magnetic field is generated at the power transmitting coil 112. Therefore, the power transmitting resonant circuit 1101 which is a parallel resonant circuit is less advantageous than the power transmitting resonant circuit 110 which is a series resonant circuit, in terms of reducing the leakage magnetic field.

K. Eleventh Embodiment:

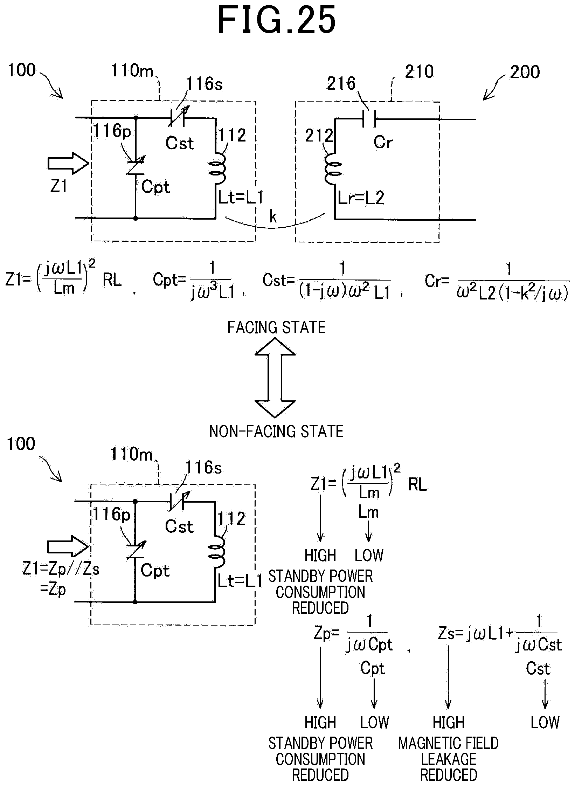

The eleventh embodiment is obtained by applying a power transmitting resonant circuit 110m and the power receiving resonant circuit 210 illustrated in Fig. 25, in order to solve the problem of the leakage magnetic field in the power transmitting resonant circuit 1101 which is a parallel resonant circuit described in the tenth embodiment. The power transmitting resonant circuit 110m is a parallel-series resonant circuit including: a series capacitor 116s connected in series with the power transmitting coil 112; and a parallel capacitor 116p connected in parallel with the power transmitting coil 112 and the series capacitor 116s. The power receiving resonant circuit 210 is a series resonant circuit including the power receiving coil 212 and the power receiving resonant capacitor 216 connected in series. A resonance method based on primary parallel-series and secondary series capacitors (also referred to as the "PSS method") is applied to the power transmitting resonant circuit 110m and the power receiving resonant circuit 210.

Capacitance Cpt of the parallel capacitor 116p in the power transmitting resonant circuit 110m, capacitance Cst of the series capacitor 116s in the power transmitting resonant circuit 110m, and the capacitance Cr of the power receiving resonant capacitor 216 in the power receiving resonant circuit 210 are set so that the power transmitting resonant circuit 110m resonates in parallel and the power receiving resonant circuit 210 resonates in series in the facing state in which the power transmitting coil 112 and the power receiving coil 212 face each other. Specifically, these settings are configured using the following expressions (7) to (9). It is assumed that the inductance Lt of the power transmitting coil 112 and the inductance Lr of the power receiving coil 212 are set to satisfy Lt = L1 and Lr = L2.

[Math. 7]
**[Math. 7]**

$$Cpt = \frac{1}{j\omega^3 L1} \qquad \cdots (7)$$

[Math. 8]
[Math. 8]

$$Cst = \frac{1}{(1-j\omega)\omega^2 L1} \qquad \cdots (8)$$

[Math. 9]
[Math. 9]

$$Cr = \frac{1}{\omega^2 L2(1-k^2/j\omega)} \qquad \cdots (9)$$

In this expression, k is a coupling coefficient for the power transmitting coil 112 and the power receiving coil 212.

Furthermore, the input impedance Z1 in the facing state in which the power transmitting coil 112 and the power receiving coil 212 face each other is represented by the following expression (10).

[Math. 10]
[Math. 10]

$$Z1 = \left(\frac{j\omega L1}{Lm}\right)^2 RL \qquad \cdots (10)$$

In this expression, Lm is mutual inductance between the power transmitting coil 112 and the power receiving coil 212, and RL is a load equivalent to the power receiving circuit 220 and the battery 230.

When the state of the power transmitting coil 112 and the power receiving coil 212 changes from the non-facing state to the facing state, the input impedance Z1 of the power transmitting resonant circuit 110m becomes the input impedance represented by the above expression (10), an electric current flows from the power transmitting circuit to the power transmitting resonant circuit 110m, and thus electric power is supplied from the contactless power feeding device 100 to the power receiving device 200.

When the state of the power transmitting coil 112 and the power receiving coil 212 changes from the facing state to the non-facing state, the coupling coefficient k is reduced, and the mutual inductance Lm is reduced to approach zero. Accordingly, the value of the denominator in the above expression (10) is reduced toward zero, and thus the input impedance Z1 increases. As a result, the input electric current for the power transmitting resonant circuit 110m can be reduced, meaning that the electric currents from the power transmitting circuit can be reduced, in other words, the standby power consumption can be reduced.

However, as described in the tenth embodiment, because of the parallel resonance involving the parallel capacitor 116p, a leakage current flows between the parallel capacitor 116p and the power transmitting coil 112, and thus a leakage magnetic field is generated at the power transmitting coil 112.

Thus, in the non-facing state, the capacitance Cst of the series capacitor 116s is preferably reduced from the value set according to the above expression (8). Accordingly, impedance Zs on the coil path side indicated in the following expression (11) can be increased, and thus the leakage current flowing to the power transmitting coil 112 can be reduced to reduce the generation of the leakage magnetic field.

[Math. 11]
[Math. 11]

$$Zs = j\omega L1 + \frac{1}{j\omega Cst} \qquad \cdots (11)$$

Furthermore, in the non-facing state, the capacitance Cp of the parallel capacitor 116p is preferably reduced from the value set according to the above expression (7). Accordingly, impedance Zp on the parallel capacitor path side indicated in the following expression (12) can further be increased, and thus the input electric current for the power transmitting resonant circuit 110m can further be reduced. As a result, the electric currents from the power transmitting circuit, in other words, the standby power consumption, can be more effectively reduced.

[Math. 12]
[Math. 12]

$$Zp = \frac{1}{j\omega Cpt} \qquad \cdots (12)$$

Note that as the method for changing the capacitance, the methods described above in the second, fourth, fifth, eighth, and ninth embodiments are available.

L. Twelfth Embodiment:

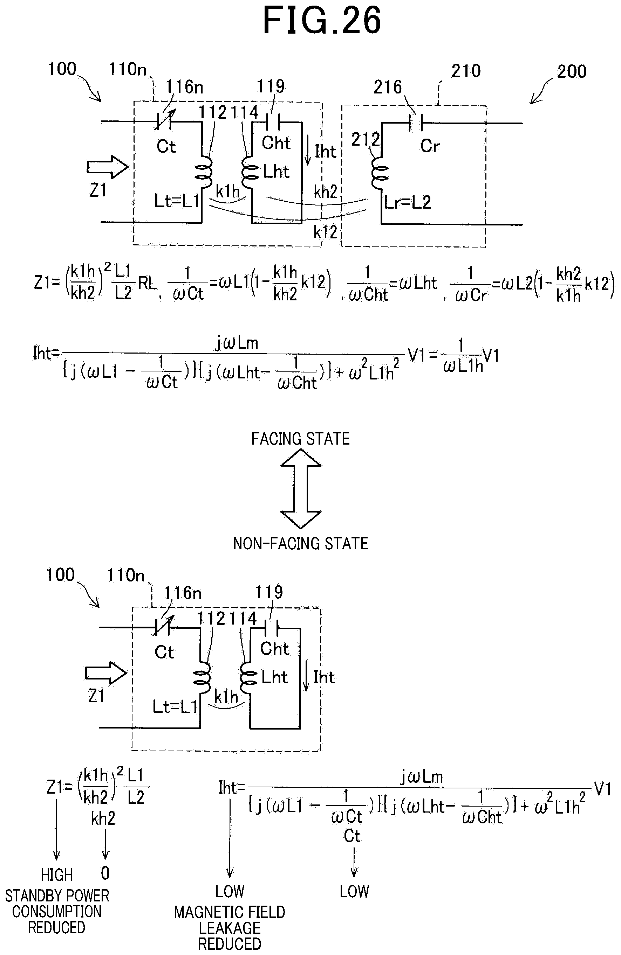

The twelfth embodiment is obtained by applying a power transmitting resonant circuit 110n including a relay resonant circuit to the power transmitting resonant circuit 110 which is a series resonant circuit described in the first embodiment, as illustrated in Fig. 26. The power transmitting resonant circuit 110n includes: a power transmitting resonant circuit portion including the power transmitting coil 112 and a power transmitting resonant capacitor 116n which are substantially the same as those in the power transmitting resonant circuit 110; and a relay resonant circuit portion including a relay coil 114 and a relay resonant capacitor 119 which form a closed loop circuit. The relay coil 114 is provided so as to satisfy the positional relationship having a predetermined coupling coefficient k1h with respect to the power transmitting coil 112.

The capacitance Ct of the power transmitting resonant capacitor 116n in the power transmitting resonant circuit 110n, the capacitance Cht of the relay resonant capacitor 119 in the power transmitting resonant circuit 110n, and the capacitance Cr of power receiving resonant capacitor 216 in the power receiving resonant circuit 210 are set so that the power transmitting resonant circuit portion, the relay circuit portion, and the power receiving resonant circuit 210 resonate in the facing state in which the power transmitting coil 112 and the power receiving coil 212 face each other. Specifically, these settings are configured using the following expressions (13) to (15). Assume that the inductance Lt of the power transmitting coil 112 is set so as to satisfy Lt = L1, the inductance of the relay coil is set to Lht, and the inductance Lr of the power receiving coil 212 is set so as to satisfy Lr = L2.

[Math. 13]
[Math. 13]

$$\frac{1}{\omega Ct} = \omega L1 \left(1 - \frac{k1h}{kh2} k12\right) \qquad \cdots (13)$$

[Math. 14]
[Math. 14]

$$\frac{1}{\omega Cht} = \omega Lht \qquad \cdots (14)$$

[Math. 15]
[Math. 15]

$$\frac{1}{\omega Cr} = \omega L2 \left(1 - \frac{kh2}{k1h} k12\right) \qquad \cdots (15)$$

Here, k1h is a coupling coefficient for the power transmitting coil 112 and the relay coil 114, kh2 is a coupling coefficient for the relay coil 114 and the power receiving coil 212, and K12 is a coupling coefficient for the power transmitting coil 112 and the power receiving coil 212.

Furthermore, the input impedance Z1 in the facing state in which the power transmitting coil 112 and the power receiving coil 212 face each other is represented by the following expression (16).

[Math. 16]
[Math. 16]

$$Z1 = \left(\frac{k1h}{kh2}\right)^2 \frac{L1}{L2} RL \qquad \cdots (16)$$

Note that RL is a load equivalent to the power receiving circuit 220 and the battery 230.

When the state of the power transmitting coil 112 and the power receiving coil 212 changes from the non-facing state to the facing state, the input impedance Z1 of the power transmitting resonant circuit 110n becomes the input impedance represented by the above expression (16), an electric current flows from the power transmitting circuit to the power transmitting resonant circuit 110n, and thus electric power is supplied from the contactless power feeding device 100 to the power receiving device 200.

Note that an electric current Iht flowing on the relay coil 114 side is represented by the following expression (17) in the non-facing state, and is represented by the following expression (18) when the power transmitting resonant circuit portion, the relay resonant circuit portion, and the power receiving resonant circuit 210 resonate in the facing state.

[Math. 17]
**[Math. 17]**

$$Iht = \frac{j\omega Lm}{\left[j\left(\omega L1 - \frac{1}{\omega Ct}\right)\right]\left[j\left(\omega Lht - \frac{1}{\omega Cht}\right)\right] + \omega^2 L1h^2} V1 \qquad \cdots (17)$$

.

[Math. 18]
[Math. 18]

$$Iht = \frac{1}{\omega L1h} V1 \qquad \cdots (18)$$

In these expressions, Lm is mutual inductance between the power transmitting coil 112 and the power receiving coil 212, L1h is mutual inductance between the power transmitting coil 112 and the relay coil 114, and V1 is an input voltage for the power transmitting resonant circuit 110m.

When the state of the power transmitting coil 112 and the power receiving coil 212 changes from the facing state to the non-facing state, the coupling coefficient kh2 is reduced to approach zero. Accordingly, the value of the denominator in the above expression (16) is reduced toward zero, and thus the input impedance Z1 increases. As a result, the input electric current for the power transmitting resonant circuit 110n can be reduced, meaning that the electric currents from the power transmitting circuit can be reduced, in other words, the standby power consumption can be reduced.

However, the electric current Iht represented by the above expression (17) flows to the relay coil 114, and thus a leakage magnetic field is generated at the relay coil 114.

In view of this, in the non-facing state, the capacitance Ct of the power transmitting resonant capacitor 116n in the power transmitting resonant circuit portion is preferably reduced from the value set according to the above expression (13). Thus, the voltage to be applied to the power transmitting coil 112 can be reduced by further increasing the input impedance Z1. Specifically, when the capacitance Ct of the power transmitting resonant capacitor 116n is reduced, the denominator in the above expression (17) increases, allowing a reduction in the electric current Iht which flows to the relay coil 114 and allowing a reduction in the leakage magnetic field that is generated at the relay coil 114. Furthermore, the capacitance Cht of the relay resonant capacitor 119 may also be reduced from the value set according to the above expression (14). This also allows a reduction in the electric current Iht which flows to the relay coil 114.

Note that as the method for changing the capacitance, the methods described above in the second, fourth, fifth, eighth, and ninth embodiments are available.

M. Thirteenth Embodiment:

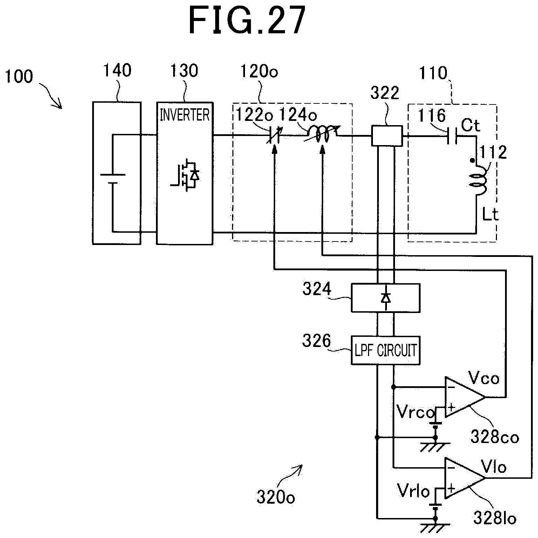

In the first to twelfth embodiments described above, the input impedance Z1 of the power transmitting resonant circuit is changed according to whether and how the power receiving coil 212 and the power transmitting coil 112 face each other. In this regard, as a configuration in which the capacitance of a filter capacitor 122 included in the filter circuit 120 illustrated in Fig. 5 and the inductance of a filter coil 124 included in the filter circuit 120 are changeable, the filter circuit 120 may be placed in the resonance state in the facing state and may be placed out of the resonance state in the non-facing state. Specifically, as illustrated in Fig. 27, a variable control circuit 320o may be used to provide the configuration in which the capacitance of a filter capacitor 122o included in a filter circuit 120o and the inductance of a filter coil 124o included in the filter circuit 120o are changeable.

The filter circuit 120o is a band-pass filter circuit including the capacitor 122o and the coil 124o connected in series. The positioning of the capacitor 122o and the coil 124o may be opposite. The capacitor 122o is a variable capacitor with capacitance variable according to a control voltage Vco. As the variable capacitor, various commonly used variable capacitors can be applied. The coil 124o is a variable coil with inductance variable according to a control voltage Vlo. As the variable coil, various commonly used variable coils can be applied.

The configuration of the variable control circuit 320h is the same as that of the variable control circuit 320g except that voltage conversion circuits 328co, 3281o are included instead of the voltage conversion circuits 328c, 3281 in the variable control circuit 320g (refer to Fig. 18) according to the seventh embodiment. Furthermore, the voltage conversion circuit 328co is the same as the voltage conversion circuit 328c except that the control voltage Vco for controlling the capacitance of the capacitor 122o is output using a reference voltage Vrco as a reference. The voltage conversion circuit 3281o is the same as the voltage conversion circuit 3281 except that the control voltage Vlo for controlling the inductance of the coil 124o is output using a reference voltage Vrlo as a reference.

The variable control circuit 320o is capable of controlling the inductance of the coil 124o in the filter circuit 120o and the capacitance of the capacitor 122o in the filter circuit 120o according to whether and how the power receiving coil 212 and the power transmitting coil 112 face each other. Specifically, in the non-facing state, the inductance and the capacitance are reduced, causing an increase in the input impedance for the filter circuit 120o and a reduction in the electric current that flows from the power transmitting circuit 130. In contrast, in the facing state, the inductance and the capacitance are increased so as to enable band-pass filter functions. Thus, advantageous effects substantially the same as the advantageous effects described in the first embodiment can be obtained in the thirteenth embodiment as well.

Note that the variable control circuit in which the electric current sensor 322 is used has thus far been described as an example of the variable control circuit 320o, but a variable control circuit in which the magnetic field sensor 322e is used as in the fifth embodiment (refer to Fig. 15) can be applied.

In another applicable configuration, only one of the inductance of the coil 124o in the filter circuit 120o and the capacitance of the capacitor 122o in the filter circuit 120o is changed instead of changing both. In yet another applicable configuration, not only is at least one of the inductance of the coil 124o in the filter circuit 120o and the capacitance of the capacitor 122o in the filter circuit 120o variable, but also at least one of the inductance of the power transmitting coil 112 in the power transmitting resonant circuit 110 and the capacitance of the power transmitting resonant capacitor 116 in the power transmitting resonant circuit 110 is variable.

Furthermore, as described in the eighth and ninth embodiments, the filter capacitor may include two or more capacitors, and a configuration in which the capacitance of the filter capacitor is changeable may be applied by switching the connection of the two or more capacitors. Similarly, the filter inductor may include two or more inductors, and a configuration in which the inductance of the filter inductor is changeable may be applied by switching the connection of the two or more inductors.

N. Fourteenth Embodiment:

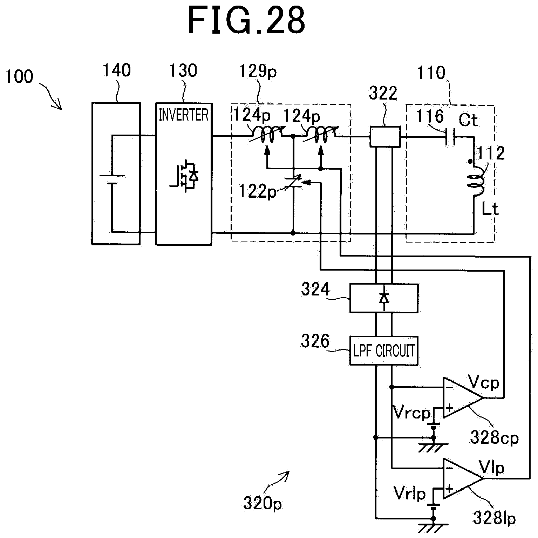

The fourteenth embodiment is obtained by replacing the filter circuit 120o (refer to Fig. 27) according to the thirteenth embodiment and the variable control circuit 320o which controls the filter circuit 120o by a filter circuit 120p and a variable control circuit 320p which controls the filter circuit 120p, as illustrated in Fig. 28.

The filter circuit 120p is an immittance filter circuit including one filter capacitor 122p and two filter coils 124p, 124p. The capacitor 122p is a variable capacitor with capacitance variable according to a control voltage Vcp. As the variable capacitor, various commonly used variable capacitors can be applied. The coil 124p is a variable coil with inductance variable according to a control voltage Vlp. As the variable coil, various commonly used variable coils can be applied.

The variable control circuit 320p is the same as the variable control circuit 320o except that voltage conversion circuits 328cp, 3281p are included instead of the voltage conversion circuits 328co, 3281o in the variable control circuit 320o (refer to Fig. 27) according to the thirteenth embodiment. Furthermore, the voltage conversion circuit 328cp is the same as the voltage conversion circuit 328co except that the control voltage Vcp for controlling the capacitance of the capacitor 122p is output using a reference voltage Vrcp as a reference. The voltage conversion circuit 328lp is the same as the voltage conversion circuit 328lo except that the control voltage Vlp for controlling the inductance of the coil 124p is output using a reference voltage Vrlp as a reference.

The variable control circuit 320p is capable of controlling the inductance of the coil 124p in the filter circuit 120p and the capacitance of the capacitor 122p in the filter circuit 120p according to whether and how the power receiving coil 212 and the power transmitting coil 112 face each other. Specifically, in the non-facing state, the inductance and the capacitance are reduced, causing an increase in the input impedance for the filter circuit 120p and a reduction in the electric current that flows from the power transmitting circuit 130. In contrast, in the facing state, the inductance and the capacitance are increased so as to enable immittance filter functions. Thus, advantageous effects substantially the same as the advantageous effects described in the first embodiment can be obtained in the fourteenth embodiment as well.

Note that the variable control circuit in which the electric current sensor 322 is used has thus far been described as an example of the variable control circuit 320p, but a variable control circuit in which the magnetic field sensor 322e is used as in the fifth embodiment (refer to Fig. 15) can be applied.

Furthermore, the configuration in which both the capacitance of the capacitor 122p and the inductance of the coil 124p are controlled has thus far been described as an example, but a configuration in which one of the capacitance of the capacitor 122p and the inductance of the coil 124p is controlled may also be applicable. In another applicable configuration, not only is at least one of the capacitance of the capacitor 122p and the inductance of the coil 124p variable, but also at least one of the inductance of the power transmitting coil 112 in the power transmitting resonant circuit 110 and the capacitance of the power transmitting resonant capacitor 116 in the power transmitting resonant circuit 110 is variable.

Furthermore, as described in the eighth and ninth embodiments, the filter capacitor may include two or more capacitors, and a configuration in which the capacitance of the filter capacitor is changeable may be applied by switching the connection of the two or more capacitors. Similarly, the filter inductor may include two or more inductors, and a configuration in which the inductance of the filter inductor is changeable may be applied by switching the connection of the two or more inductors may be applied.

Furthermore, the thirteenth embodiment describes an exemplary configuration in which a band-pass filter circuit is applied as the filter circuit and the fourteenth embodiment describes an exemplary configuration in which an immittance filter circuit is applied as the filter circuit, but these are not limiting; other various filter circuits can also be applied.

O. Fifteenth Embodiment:

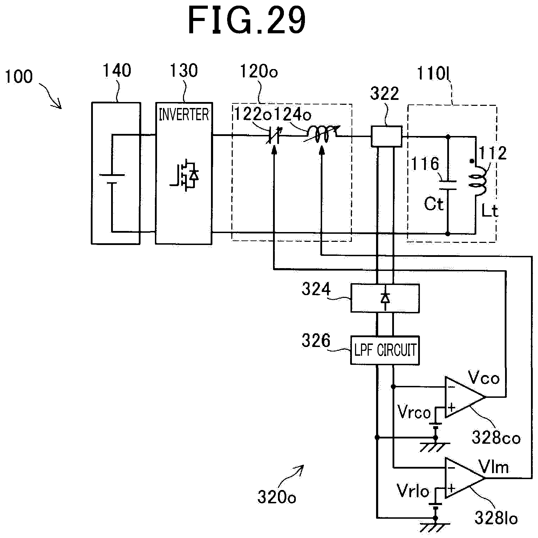

The fifteenth embodiment is obtained by replacing the power transmitting resonant circuit 110 of the series resonance type (refer to Fig. 27) according to the thirteenth embodiment by the power transmitting resonant circuit 110l of the parallel resonance type (refer to Fig. 24), as illustrated in Fig. 29. In this embodiment, the advantageous effects described in the first embodiment can also be obtained as in the thirteenth embodiment. Note that the filter circuit 120o may be other filter circuits such as the filter circuit 120p (refer to Fig. 28) according to the fourteenth embodiment. The power transmitting resonant circuit may be replaced by the power transmitting resonant circuit 110m of the parallel resonance type illustrated in Fig. 25.

P. Sixteenth Embodiment:

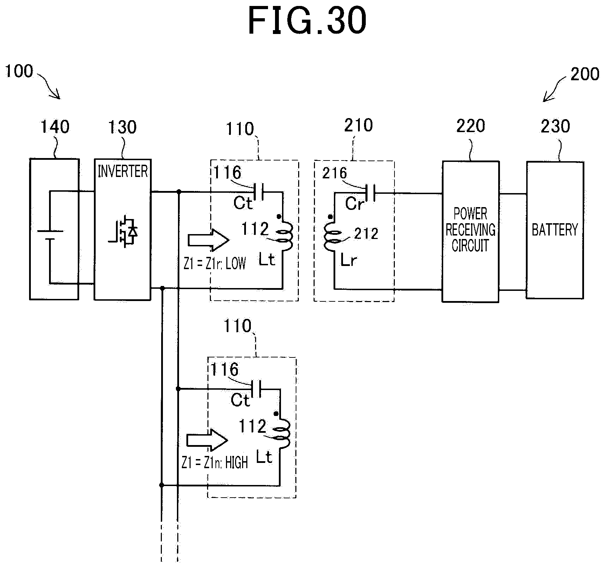

The contactless power feeding device 100 according to each embodiment has thus far been described as including one power transmitting resonator as an example, but this is not limiting; the contactless power feeding device 100 may include two or more power transmitting resonators in parallel with one power transmitting circuit, as illustrated in Figs. 30 to 32.

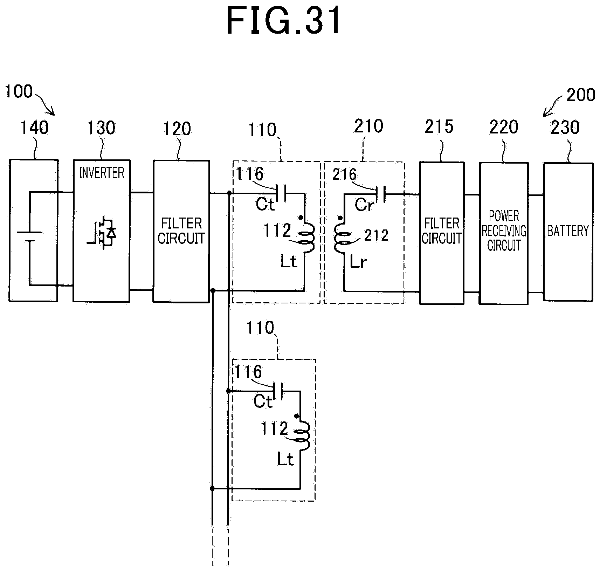

Fig. 30 illustrates a configuration in which two or more power transmitting resonant circuits 110 each of which is illustrated in Fig. 1 are arranged in parallel with the power transmitting circuit 130 as the power transmitting resonator. Fig. 31 illustrates a configuration in which one filter circuit 120 is disposed between the power transmitting circuit 130 and the two or more power transmitting resonant circuits 110. It is sufficient that among the two or more power transmitting resonant circuits 110, the power transmitting resonant circuit 110 including the power transmitting coil 112 which the power receiving coil 212 in the power receiving resonant circuit 210 of the power receiving device 200 faces operate in substantially the same manner as in the facing state described in the first embodiment, and the other power transmitting resonant circuits 110 operate in substantially the same manner as in the non-facing state described in the first embodiment. In this case, advantageous effects substantially the same as the advantageous effects described in the first embodiment can be obtained.

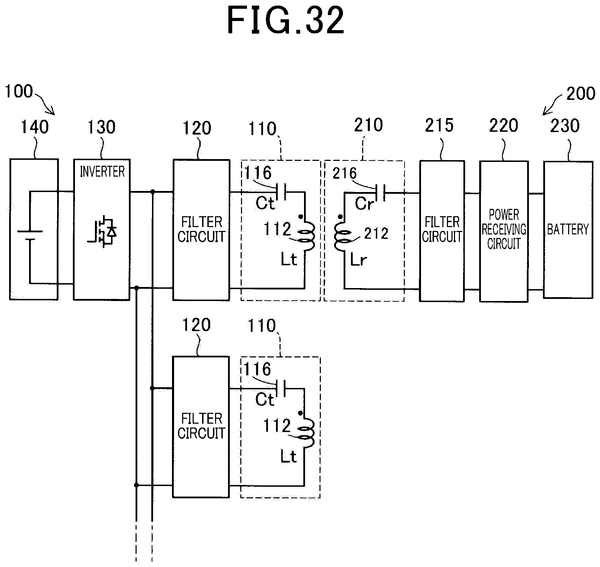

Fig. 32 illustrates a configuration in which two or more sets of the filter circuit 120 and the power transmitting resonant circuit 110 illustrated in Fig. 5 are arranged in parallel with the power transmitting circuit 130 as the power transmitting resonator. In this configuration, it is sufficient that among the two or more power transmitting resonant circuits 110, the power transmitting resonant circuit 110 including the power transmitting coil 112 which the power receiving coil 212 in the power receiving resonant circuit 210 of the power receiving device 200 faces operate in substantially the same manner as in the facing state described in the first embodiment, and the other power transmitting resonant circuits 110 operate in substantially the same manner as in the non-facing state described in the first embodiment. In this case, advantageous effects substantially the same as the advantageous effects described in the first embodiment can be obtained. Furthermore, it is sufficient that among the two or more filter circuits 120, the filter circuit 120 including the power transmitting coil 112 which the power receiving coil 212 in the power receiving resonant circuit 210 of the power receiving device 200 faces operate in substantially the same manner as with the filter circuit (refer to Figs. 27 and 28) in the facing state described in the thirteenth and fourteenth embodiments, and the other filter circuits 120 operate in substantially the same manner as with the filter circuit in the non-facing state described in the thirteenth and fourteenth embodiments. In this case, advantageous effects substantially the same as the advantageous effects described in the thirteenth and fourteenth embodiments and the first embodiment can be obtained.

Note that the power transmitting resonant circuits illustrated in Figs. 1 and 5 are cited as examples for the contactless power feeding devices including the plurality of power transmitting resonators illustrated in Figs. 30 to 32, but the power transmitting resonant circuit portion described in other embodiments can also be applied. Furthermore, the contactless power feeding device including the plurality of power transmitting resonators illustrated in Fig. 32 includes the filter circuits illustrated in Figs. 27 and 28 as an example, but may include other filter circuits as an example.

Q. Seventeenth Embodiment:

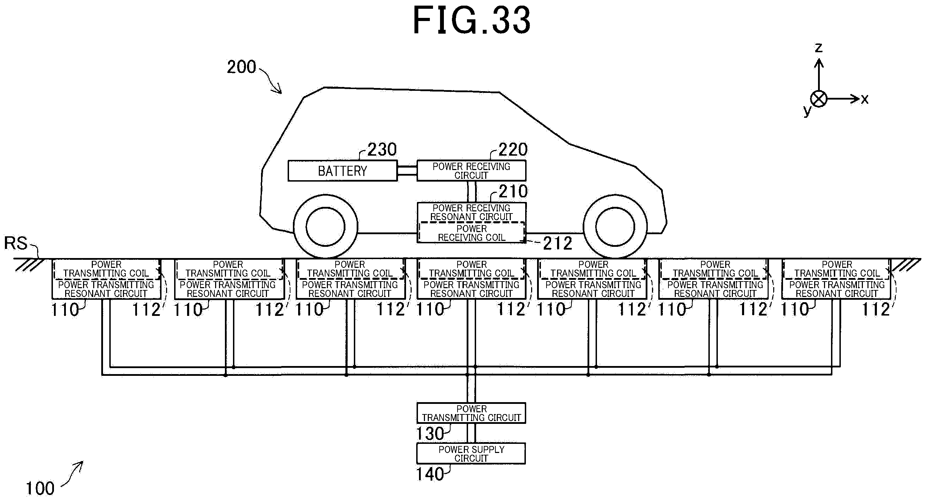

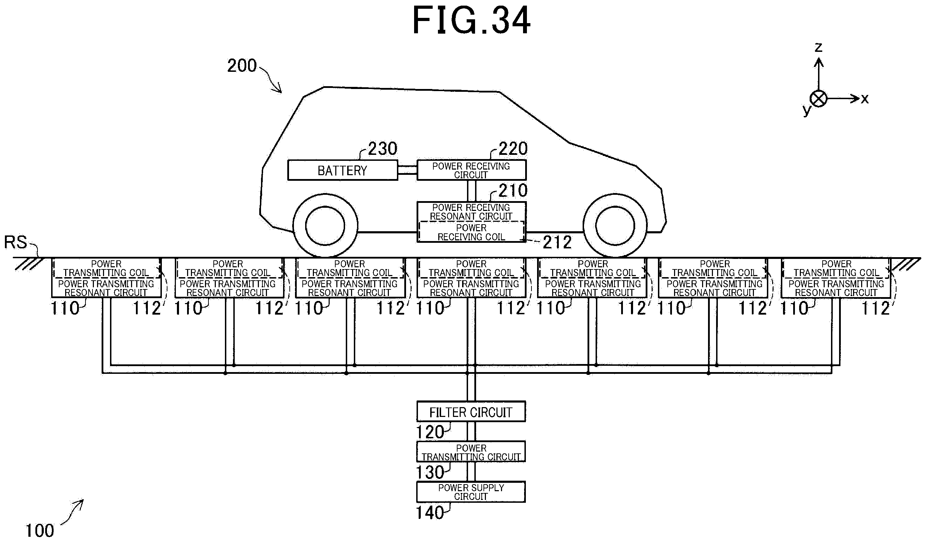

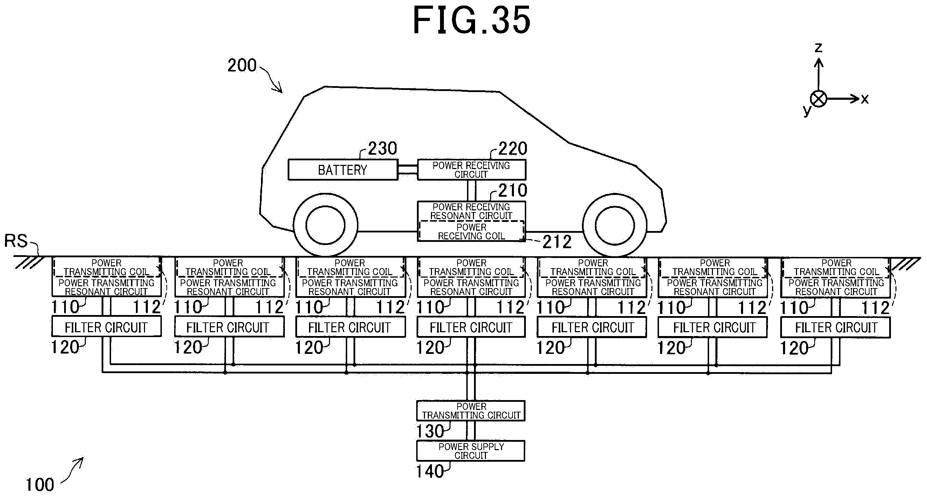

The contactless power feeding devices 100 including the plurality of power feeding resonators illustrated in Figs. 30 to 32 can be applied as contactless power feeding devices in contactless power feeding systems for vehicles, as illustrated in Figs. 33 to 35.

The contactless power feeding systems for vehicles illustrated in Figs. 33 to 35 are power feeding systems capable of supplying electric power from the contactless power feeding device 100 installed along the course of a vehicle travel path RS to a vehicle (hereinafter also referred to as a "vehicle 200") that is the power receiving device 200. The vehicle 200 is configured as an electric vehicle or a hybrid vehicle, for example. In Figs. 33 to 35, the x-axis direction indicates a direction of travel of the vehicle 200 along the lane of the vehicle travel path RS, the y-axis direction indicates the width direction of the vehicle travel path RS, and the z-axis direction indicates the upward vertical direction. The directions of the x, y, and z axes in the other figures to be described later indicate the same directions as those in Figs. 33 to 35.

The power transmitting resonant circuit 110 includes: the power transmitting coil 112 installed in the vehicle travel path RS; and the power transmitting resonant capacitor 116 not illustrated in the drawings (refer to Figs. 30 to 32). The power transmitting coil 112 in each power transmitting resonant circuit 110 is aligned in the x direction along the lane of the vehicle travel path RS. Note that Figs. 33 to 35 illustrate seven power transmitting resonant circuits 110. However, this is not limiting; two or more power transmitting coils 112 may be aligned in the x and y directions.

The power receiving resonant circuit 210 includes the power receiving coil 212 and the power receiving resonant capacitor 216 not illustrated in the drawings (refer to Figs. 30 to 32), and at least the power receiving coil 212 is disposed at the bottom of the vehicle 200 so as to face the power transmitting coil 112 in the power transmitting resonant circuit 110.

The alternating-current power obtained by the power receiving resonant circuit 210 is converted by the power receiving circuit 220 into direct-current power, and the direct-current power is used to charge the battery 230 and is used as energy for driving a motor or the like not illustrated in the drawings.

With the contactless power feeding device in this contactless power feeding system for vehicles, substantially the same advantageous effects as those produced by the contactless power feeding devices according to the embodiments described above can be obtained.

The dimensions of the power transmitting coil 112 installed in the vehicle travel path RS are preferably set as described below.

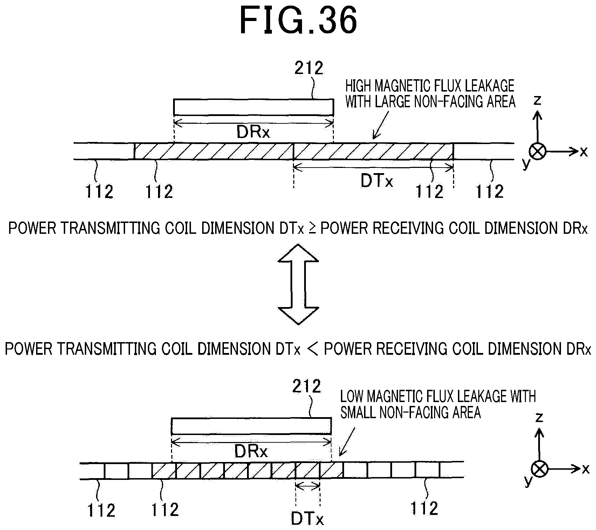

Fig. 36 illustrates settings in which electric power is supplied to the power receiving coil from all the power transmitting coils (the power transmitting coils indicated by hatching) each including a portion that faces the power receiving coil. As illustrated at the top stage of the figure, when a power transmitting coil dimension DTx in the direction of alignment of the power transmitting coils 112, that is, in the x direction, is larger than or equal to a power receiving coil dimension DRx of the power receiving coil in the x direction, there are cases where the area of a portion that does not face the power receiving coil 212 (hereinafter also referred to as a "non-facing area") is large and the magnetic flux leakage is great. In contrast, as illustrated at the bottom stage of the figure, when the power transmitting coil dimension DTx is smaller than the power receiving coil dimension DRx, the non-facing area can be smaller and the magnetic flux leakage can be less than those in the case of the top stage.

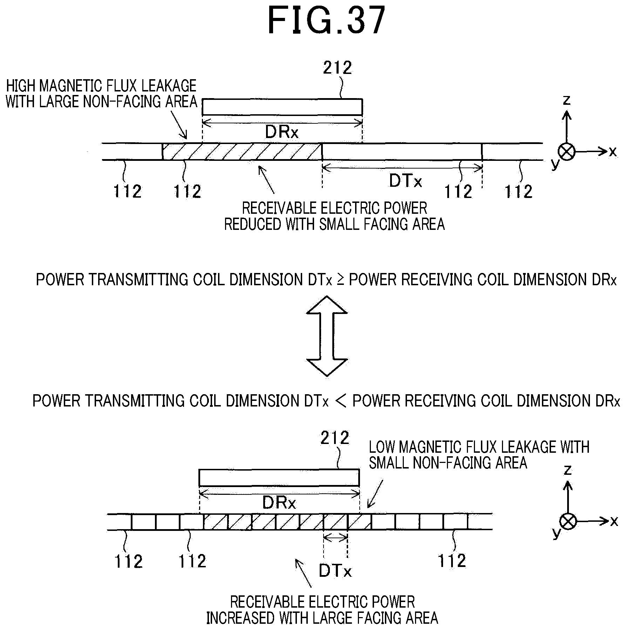

Furthermore, Fig. 37 illustrates settings in which electric power is supplied to the power receiving coil from only the power transmitting coil (the power transmitting coil indicated by hatching) with at least 50% facing area between the power receiving coil and the power transmitting coil. As illustrated at the top stage of the figure, when the power transmitting coil dimension DTx is larger than or equal to the power receiving coil dimension DRx, there are cases where the non-facing area is large and the magnetic flux leakage is great, similar to the case illustrated in Fig. 36. There are also cases where the area (facing area) of a portion of the power receiving coil 212 that faces the power transmitting coil 112 is small and the amount of electric power that can be received by the power receiving coil 212 is small. In contrast, as illustrated at the bottom stage of the figure, when the power transmitting coil dimension DTx is smaller than the power receiving coil dimension DRx, the non-facing area can be smaller and the magnetic flux leakage can be less than those in the case of the top stage. Furthermore, the facing area can be larger and the amount of electric power that can be received by the power receiving coil 212 can be larger than those in the case of the top stage.

Thus, the dimensions of the power transmitting coil 112 are preferably set so that the power transmitting coil dimension DTx is smaller than the power receiving coil dimension DRx.

R. Other Embodiments:

(1) The above embodiments describe exemplary configurations in which a voltage or a magnetic field is used as a physical quantity for changing the capacitance of a capacitor and the inductance of a coil, but these are not limiting; a capacitor with capacitance that changes according to physical quantities such as light, temperature, and force or a coil with inductance that changes according to physical quantities such as light, temperature, and force may be used. In this case, it is sufficient that a variable control circuit that outputs a corresponding physical quantity according to whether and how the power transmitting coil and the power receiving coil face each other be used.

(2) The above embodiments describe the cases where the impedance of the power transmitting resonant circuit or the impedance of the filter circuit is changed, but both the impedance of the power transmitting resonant circuit and the impedance of the filter circuit may be changed.

(3) The above embodiments describe exemplary cases in which each of the power transmitting coil 112 on the power transmitting side and the power receiving coil 212 on the power receiving side has a single phase. However, these are not limiting. The power transmitting side may be composed of a multiphase power transmitting coil. Similarly, the power receiving side may be composed of a multiphase power receiving coil. For example, the power transmitting side may be composed of a single-phase power transmitting coil and the power receiving side may be composed of a multiphase power receiving coil with two phases or three or more phases. Alternatively, the power transmitting side may be composed of a multiphase power transmitting coil with two phases or three or more phases and the power receiving side may be composed of a single-phase or multiphase power receiving coil.

The controllers and the methods used by the controllers that are described in the present disclosure may be implemented using a dedicated computer provided by configuring memory and a processor programmed by a computer program so as to perform one or more specific functions. Alternatively, the controllers and the methods used by the controllers that are described in the present disclosure may be implemented using a dedicated computer provided by configuring a processor with one or more dedicated hardware logic circuits. Alternatively, the controllers and the methods used by the controllers that are described in the present disclosure may be implemented using one or more dedicated computers including a combination of: memory and a processor programmed so as to perform one or more functions; and a processor configured with one or more hardware logic circuits. The computer program may be stored in a tangible nontransitory computer-readable recording medium as an instruction to be performed by a computer.

The present disclosure is not limited to the above-described embodiments and may be implemented with various configurations without departing from the spirit and scope of the present disclosure. For example, technical features in the embodiments corresponding to the technical features in the modes set forth in the summary of the invention can be subject to replacement, combination, or the like, as appropriate, in order to solve part or all of the aforementioned problems or in order to achieve part or all of the aforementioned advantageous effects. Furthermore, these technical features that are not described in the present specification as being essential can be omitted, as appropriate.

**Claims**

1. A contactless power feeding device (100) that supplies electric power to a power receiving device (200) without contact, the contactless power feeding device comprising:

a power transmitting circuit (130) that transmits alternating-current power; and
a power transmitting resonator including a power transmitting coil (112), wherein
input impedance of the power transmitting resonator is set low in a facing state in which a power receiving coil (212) included in the power receiving device (200) faces the power transmitting coil, and
the input impedance of the power transmitting resonator is set high in a non-facing state in which the power receiving coil does not face the power transmitting coil.

2. The contactless power feeding device according to claim 1, wherein

the power transmitting resonator includes a power transmitting resonant circuit (110) including the power transmitting coil and a power transmitting resonant capacitor (116),
the input impedance of the power transmitting resonant circuit is set low as a result of the power transmitting resonant circuit being placed in a resonance state in the facing state, and
the input impedance of the power transmitting resonant circuit is set high as a result of the power transmitting resonant circuit being placed out of the resonance state in the non-facing state.

3. The contactless power feeding device according to claim 2, wherein
the power transmitting resonant capacitor is configured to be connected in series with the power transmitting coil.

4. The contactless power feeding device according to claim 2 or 3, wherein
capacitance of the power transmitting resonant capacitor is set low in the non-facing state.

5. The contactless power feeding device according to claim 1, wherein

the power transmitting resonator includes:

a power transmitting resonant circuit (110) including the power transmitting coil and a power transmitting resonant capacitor; and
a filter circuit (120) disposed between the power transmitting circuit and the power transmitting resonant circuit and including a filter coil (124) and a filter capacitor (122), and

the input impedance of the power transmitting resonant circuit is set low as a result of the power transmitting resonant circuit being placed in a resonance state in the facing state, and the input impedance of the power transmitting resonant circuit is set high as a result of the power transmitting resonant circuit being placed out of the resonance state in the non-facing state, or
input impedance of the filter circuit is set low at least as a result of the filter circuit being placed in the resonance state in the facing state, and the input impedance of the filter circuit is set high at least as a result of the filter circuit being placed out of the resonance state in the non-facing state.

6. The contactless power feeding device according to claim 5, wherein
the filter capacitor and the power transmitting resonant capacitor are configured to be connected in series with the power transmitting coil.

7. The contactless power feeding device according to claim 5 or 6, wherein
in the non-facing state,

when the input impedance of the power transmitting resonant circuit is set high, capacitance of the power transmitting resonant capacitor is set low, and
when the input impedance of the filter circuit is set high, capacitance of the filter capacitor is set low.

8. The contactless power feeding device according to claim 4 or 7, wherein

the power transmitting resonant circuit includes a parallel-series resonant circuit including: the power transmitting coil; and a series capacitor (116s) connected in series with the power transmitting coil and a parallel capacitor (116p) connected in parallel with the power transmitting coil, each of the series capacitor and the parallel capacitor being the power transmitting resonant capacitor,
the power receiving device includes a power receiving resonant circuit (210) including:
the power receiving coil; and a power receiving resonant capacitor (216) connected in series with the power receiving coil, and
the series capacitor has variable capacitance.

9. The contactless power feeding device according to claim 8, wherein
the parallel capacitor has variable capacitance.

10. The contactless power feeding device according to claim 4 or 7, wherein

the power transmitting resonant circuit includes:

a series resonant circuit including the power transmitting coil and the power transmitting resonant capacitor connected in series with the power transmitting coil; and
a relay resonant circuit including a relay coil (114) disposed facing the power transmitting coil and a relay resonant capacitor (119) connected in series with the relay coil,

the power receiving device includes a power receiving resonant circuit including a power receiving resonant capacitor connected in series with the power receiving coil, and
the power transmitting resonant capacitor has variable capacitance.

11. The contactless power feeding device according to claim 10, wherein
the relay resonant capacitor has variable capacitance.

12. The contactless power feeding device according to claim 7, wherein

the filter circuit is a band-pass filter circuit (120m), and
in the non-facing state, the filter circuit is placed out of the resonance state by making the capacitance of the filter capacitor variable.

13. The contactless power feeding device according to any one of claims 4 and 7 to 12, wherein

a variable capacitor (116d) with capacitance that changes according to an input voltage is used as a capacitor with the capacitance that is set low,
the contactless power feeding device comprises a sensor (322) that detects an electric current flowing to the power transmitting coil or a sensor (322e) that detects a magnetic field generated by the power transmitting coil, and
the capacitance of the variable capacitor is variable according to a detection value of the sensor.

14. The contactless power feeding device according to any one of claims 2, 3, 5, and 6, wherein

the power transmitting resonant capacitor is a capacitor with capacitance that is set low, and
a variable capacitor (116b) with capacitance that changes according to a magnetic field is used as the power transmitting resonant capacitor.

15. The contactless power feeding device according to claim 14, wherein
the variable capacitor is disposed inward of looped wiring (312) wound around a core (310) of the power transmitting coil, on a surface of the core that extends along the looped wiring.

16. The contactless power feeding device according to any one of claims 4 and 7 to 14, wherein
a capacitor with the capacitance that is set low has minimum capacitance of a predetermined target value at a point in time when a facing area between the power transmitting coil and the power receiving coil reaches zero and the power transmitting coil and the power receiving coil are placed in the non-facing state.

17. The contactless power feeding device according to any one of claims 4 and 7 to 16, wherein
a capacitor with the capacitance that is set low has capacitance linearly reduced as a facing area between the power transmitting coil and the power receiving coil is reduced.

18. The contactless power feeding device according to any one of claims 2 to 17, wherein
inductance of the power transmitting coil is set low in a state in which the power receiving coil does not face the power transmitting coil.

19. The contactless power feeding device according to any one of claims 5 to 7, claim 12, claim 13 directly or indirectly dependent from claim 7 or 12, claim 16 directly or indirectly dependent from claim 7 or 12, and claim 17 directly or indirectly dependent from claim 7 or 12, wherein
inductance of the filter coil is set low in a state in which the power receiving coil does not face the power transmitting coil.

20. The contactless power feeding device according to claim 19, wherein

   a variable coil (112f, 124o, 124p) with inductance that changes according to an input voltage is used as a coil with the inductance that is set low,
   the contactless power feeding device comprises a sensor (322) that detects an electric current flowing to the power transmitting coil or a sensor (322e) that detects a magnetic field generated by the power transmitting coil, and
   the inductance of the variable coil is variable according to a detection value of the sensor.

21. The contactless power feeding device according to claim 13 or 20, wherein
the sensor that detects the magnetic field is disposed inward of looped wiring wound around a core of the power transmitting coil, on a surface of the core that extends along the looped wiring.

22. The contactless power feeding device according to any one of claims 2 to 21, wherein
a plurality of the power transmitting resonators are connected in parallel with the power transmitting circuit.

23. The contactless power feeding device according to claim 22, wherein
a dimension (DTx) of each of a plurality of the power transmitting coils is smaller than a dimension (DRx) of the power receiving coil in a direction in which the plurality of power transmitting coils are aligned.

# FIG.1

FACING STATE

⇕

NON-FACING STATE

# FIG.2

| FACING | | NON-FACING | | |
|---|---|---|---|---|
| FULLY FACING | PARTIALLY OVERLAPPING | BORDER | SEPARATED | ISOLATED |
| 212<br>112 | 212<br>112 | 212<br>112 | 212<br>112 | 212<br>112 |

z
y ⊗ → x

# FIG.3

# FIG.4

# FIG.5

# FIG.6

| FACING | | $Ct=C1$, $Lt=L1$<br>$Z110=j(\omega Lr-1/\omega Cr)$<br>$\qquad =j(\omega L1-1/\omega C1)=0$<br>$Z1=Z1r \Rightarrow Z1:LOW$ |
|--------|------|-------------------------------|
| NON-FACING | | $Ct<C1$, $Lt=L1$<br>$Z110=\|j(\omega Lr-1/\omega Cr)\|>0$<br>$Z1=Z1n>Z1r \Rightarrow Z1:HIGH$ |

# FIG.7

# FIG.8

| | | |
|---|---|---|
| FACING | | $Ct=C1,\ Lt=L1$<br><br>$Z110 = j(\omega Lr - 1 / \omega Cr)$<br>$\qquad = j(\omega L1 - 1 / \omega C1) = 0$<br><br>$Z1 = Z1r \Rightarrow Z1 : LOW$ |
| NON-FACING | | $Ct=C1,\ Lt<L1$<br>$Z110 = |j(\omega Lr - 1 / \omega Cr)| > 0$<br><br>$Z1 = Z1n > Z1r \Rightarrow Z1 : HIGH$ |

# FIG.9

# FIG.10

FACING STATE

NON-FACING STATE

# FIG.11

# FIG.12

EP 4 007 119 A1

# FIG.13

# FIG.14

# FIG.15

# FIG.16

# FIG.17

# FIG.18

# FIG.19

Ct=Chs<Chl : NON-FACING
=Chl+Chs=C1 : FACING

# FIG.20

POWER FEEDING CONTROL

S10
$Vd \geq Vth\_on$ ?
NO
YES

TURN ON SWITCHING CIRCUIT
START POWER FEEDING — S20

S30
$Vd \leq Vth\_off$ ?
NO
YES

TURN OFF SWITCHING CIRCUIT
STOP POWER FEEDING — S40

# FIG.21

100

110  116h  116ha

$Ct=Chs<Chl$  :NON-FACING
$=Chl+Chs=C1$ :FACING

Chs

117  116hb  Chl

112

Lt  118

324

326  LPF CIRCUIT

Vs  Vd

320i  328h  Vth

# FIG.22

Ct=Chs<Chl : NON-FACING
=Chl+Chs=C1 : FACING

# FIG.23

$Ct=\dfrac{Chs \cdot Chl}{Chs+Chl} <Chl$ : NON-FACING

$=Chl=C1$ : FACING

Chl>Chs

# FIG.24

FACING STATE

⇕

NON-FACING STATE

# FIG.25

$$Z1=\left(\frac{j\omega L1}{Lm}\right)^2 RL \quad , \quad Cpt=\frac{1}{j\omega^3 L1} \, , \quad Cst=\frac{1}{(1-j\omega)\omega^2 L1} \, , \quad Cr=\frac{1}{\omega^2 L2(1-k^2/j\omega)}$$

FACING STATE

⇕

NON-FACING STATE

$$Z1=\left(\frac{j\omega L1}{Lm}\right)^2 RL$$

Z1=Zp//Zs
=Zp

| | |
|---|---|
| Z1 | Lm |
| ↓ | ↓ |
| HIGH | LOW |

STANDBY POWER
CONSUMPTION
REDUCED

$$Zp=\frac{1}{j\omega Cpt} \quad , \quad Zs=j\omega L1+\frac{1}{j\omega Cst}$$

| Cpt | | Cst | |
|---|---|---|---|
| ↓ | ↓ | ↓ | ↓ |
| HIGH | LOW | HIGH | LOW |

STANDBY POWER          MAGNETIC FIELD
CONSUMPTION               LEAKAGE
REDUCED                        REDUCED

# FIG.26

$$Z1=\left(\frac{k1h}{kh2}\right)^2\frac{L1}{L2}RL, \quad \frac{1}{\omega Ct}=\omega L1\left(1-\frac{k1h}{kh2}k12\right), \quad \frac{1}{\omega Cht}=\omega Lht, \quad \frac{1}{\omega Cr}=\omega L2\left(1-\frac{kh2}{k1h}k12\right)$$

$$Iht=\frac{j\omega Lm}{\{j(\omega L1-\frac{1}{\omega Ct})\}\{j(\omega Lht-\frac{1}{\omega Cht})\}+\omega^2 L1h^2}V1=\frac{1}{\omega L1h}V1$$

FACING STATE

⇕

NON-FACING STATE

$$Z1=\left(\frac{k1h}{kh2}\right)^2\frac{L1}{L2}$$

kh2
↓
0

HIGH
STANDBY POWER
CONSUMPTION
REDUCED

$$Iht=\frac{j\omega Lm}{\{j(\omega L1-\frac{1}{\omega Ct})\}\{j(\omega Lht-\frac{1}{\omega Cht})\}+\omega^2 L1h^2}V1$$

↓
LOW
MAGNETIC FIELD
LEAKAGE
REDUCED

Ct
↓
LOW

# FIG.27

# FIG.28

# FIG.29

# FIG.30

100 ↙    200 ↙

140    130         110         210         220         230

INVERTER    116    Ct    216    Cr    POWER RECEIVING CIRCUIT    BATTERY

112    Lt    212    Lr

Z1 = Z1r: LOW

110

116    Ct

112    Lt

Z1 = Z1n: HIGH

# FIG.31

# FIG.32

# FIG.33

200

230
BATTERY

220
POWER RECEIVING CIRCUIT

210
POWER RECEIVING RESONANT CIRCUIT

POWER RECEIVING COIL
212

z

x

y

RS

| POWER TRANSMITTING COIL | POWER TRANSMITTING COIL | POWER TRANSMITTING COIL | POWER TRANSMITTING COIL | POWER TRANSMITTING COIL | POWER TRANSMITTING COIL | POWER TRANSMITTING COIL |
|---|---|---|---|---|---|---|
| POWER TRANSMITTING RESONANT CIRCUIT | POWER TRANSMITTING RESONANT CIRCUIT | POWER TRANSMITTING RESONANT CIRCUIT | POWER TRANSMITTING RESONANT CIRCUIT | POWER TRANSMITTING RESONANT CIRCUIT | POWER TRANSMITTING RESONANT CIRCUIT | POWER TRANSMITTING RESONANT CIRCUIT |

110  112  110  112  110  112  110  112  110  112  110  112  110  112

POWER TRANSMITTING CIRCUIT
130

POWER SUPPLY CIRCUIT
140

100

EP 4 007 119 A1

# FIG.34

EP 4 007 119 A1

# FIG.35

EP 4 007 119 A1

# FIG.36

212

HIGH MAGNETIC FLUX LEAKAGE
WITH LARGE NON-FACING AREA

DRx

DTx

112   112                    112   112

POWER TRANSMITTING COIL DIMENSION DTx ≥ POWER RECEIVING COIL DIMENSION DRx

⇕

POWER TRANSMITTING COIL DIMENSION DTx < POWER RECEIVING COIL DIMENSION DRx

212

LOW MAGNETIC FLUX LEAKAGE WITH
SMALL NON-FACING AREA

DRx

112   112          112

DTx

# FIG.37

HIGH MAGNETIC FLUX LEAKAGE
WITH LARGE NON-FACING AREA

212

DRx

DTx

112    112    112    112

RECEIVABLE ELECTRIC POWER
REDUCED WITH SMALL FACING AREA

POWER TRANSMITTING COIL DIMENSION DTx $\geq$ POWER RECEIVING COIL DIMENSION DRx

POWER TRANSMITTING COIL DIMENSION DTx $<$ POWER RECEIVING COIL DIMENSION DRx

212    LOW MAGNETIC FLUX LEAKAGE WITH
       SMALL NON-FACING AREA

DRx

112    112    DTx    112

RECEIVABLE ELECTRIC POWER
INCREASED WITH LARGE FACING AREA

## INTERNATIONAL SEARCH REPORT

| | International application No. |
| --- | --- |
| | PCT/JP2020/026128 |

### A. CLASSIFICATION OF SUBJECT MATTER
Int.Cl. H02J50/12(2016.01)i, H02J50/40(2016.01)i, H02J50/90(2016.01)i
FI: H02J50/12, H02J50/90, H02J50/40

According to International Patent Classification (IPC) or to both national classification and IPC

### B. FIELDS SEARCHED

Minimum documentation searched (classification system followed by classification symbols)
Int.Cl. H02J50/12, H02J50/40, H02J50/90

Documentation searched other than minimum documentation to the extent that such documents are included in the fields searched
Published examined utility model applications of Japan      1922–1996
Published unexamined utility model applications of Japan    1971–2020
Registered utility model specifications of Japan            1996–2020
Published registered utility model applications of Japan    1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2014-217245 A (YAZAKI CORPORATION) 17.11.2014 (2014-11-17), paragraphs [0019]-[0024], [0028], fig. 1 | 1-2<br>4, 22-23<br>3, 5-21 |
| Y | JP 2015-65756 A (NIPPON SOKEN INC.) 09.04.2015 (2015-04-09), paragraphs [0120]-[0123], fig. 13 | 4 |
| X<br>Y<br>A | JP 2019-71719 A (YT CO., LTD.) 09.05.2019 (2019-05-09), paragraphs [0005]-[0010], [0021], [0022], [0028], fig. 1, 2, 17-19 | 1<br>22-23<br>2-21 |
| Y | JP 2018-137988 A (PANASONIC INTELLECTUAL PROPERTY MANAGEMENT CO., LTD.) 30.08.2018 (2018-08-30), paragraphs [0074], [0075], fig. 21 | 23 |
| A | JP 2000-148932 A (HITACHI, LTD.) 30.05.2000 (2000-05-30), entire text, all drawings | 1-23 |

☒  Further documents are listed in the continuation of Box C.      ☒  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>31.08.2020 | Date of mailing of the international search report<br>08.09.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**EP 4 007 119 A1**

<div align="center"><b>INTERNATIONAL SEARCH REPORT</b></div>

| International application No. |
| --- |
| PCT/JP2020/026128 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2017-5796 A (DENSO CORPORATION) 05.01.2017 (2017-01-05), entire text, all drawings | 1-23 |
| A | JP 2011-50140 A (SONY CORPORATION) 10.03.2011 (2011-03-10), entire text, all drawings | 1-23 |

Form PCT/ISA/210 (second sheet) (January 2015)

52

INTERNATIONAL SEARCH REPORT

Information on patent family members

International application No.

PCT/JP2020/026128

| JP 2014-217245 A | 17.11.2014 | US 2016/0049800 A1<br>paragraphs [0024]-[0029], [0033],<br>fig. 1<br>WO 2014/178345 A1 |
| JP 2015-65756 A | 09.04.2015 | (Family: none) |
| JP 2019-71719 A | 09.05.2019 | (Family: none) |
| JP 2018-137988 A | 30.08.2018 | US 2016/0121731 A1<br>paragraphs [0104],[0105], fig. 21<br>EP 3016231 A1<br>CN 105576847 A |
| JP 2000-148932 A | 30.05.2000 | (Family: none) |
| JP 2017-5796 A | 05.01.2017 | (Family: none) |
| JP 2011-50140 A | 10.03.2011 | US 2011/0049995 A1<br>entire text, all drawings<br>EP 2290782 A2<br>CN 102005827 A |

Form PCT/ISA/210 (patent family annex) (January 2015)

**EP 4 007 119 A1**

**Patent documents cited in the description**

- JP 2019136680 A
- JP 2020087198 A
- JP 2019071719 A